# EUROPEAN PATENT APPLICATION

(11) **EP 4 478 798 A1**
(43) Date of publication of application: **18.12.2024**
(21) Application number: 22931881.1
(22) Date of filing: 23.12.2022
(51) Int. Cl.: H04W 64/00

(54) **METHOD AND APPARATUS FOR DETERMINING POSITIONING MODE**

(30) Priority: 18.03.2022 CN 202210272480
(71) Applicant: Huawei Technologies Co., Ltd., Shenzhen, Guangdong 518129 (CN)
(72) Inventor: HU, Xiaodong, Shenzhen, Guangdong 518129 (CN); ZONG, Zaifeng, Shenzhen, Guangdong 518129 (CN); XI, Jiaojiao, Shenzhen, Guangdong 518129 (CN); JIA, Jianxin, Shenzhen, Guangdong 518129 (CN); WU, Wenfu, Shenzhen, Guangdong 518129 (CN); ZHOU, Runze, Shenzhen, Guangdong 518129 (CN)
(74) Representative: Pfenning, Meinig & Partner mbB
(86) International application number: PCT/CN2022/141394
(87) International publication number: WO 2023/173875

(57) **Abstract**

Embodiments of this application provide a positioning manner determining method and apparatus. A positioning manner includes user plane positioning and control plane positioning. The method includes: A core network element receives a first message, where the first message is used to request to position a terminal device; and the core network element sends a first indication message to the terminal device based on a positioning capability of the terminal device, where the first indication message indicates to use a user plane positioning manner for positioning the terminal device, and the positioning capability of the terminal device indicates a positioning manner supported by the terminal device, to reduce signaling overheads and reduce a positioning latency. According to the foregoing solutions, a network side may determine, based on an actual situation, a positioning manner most suitable for the terminal device, to improve terminal positioning efficiency. In addition, the terminal device may be positioned based on a positioning manner indication delivered by the network side. In this way, the terminal device does not need to listen to, at any moment, an indication of starting the user plane positioning, so that power consumption of the terminal device can be reduced.

## Description

This application claims priority to Chinese Patent Application No. 202210272480.1, filed with the China National Intellectual Property Administration on March 18, 2022 and entitled "POSITIONING MANNER DETERMINING METHOD AND APPARATUS", which is incorporated herein by reference in its entirety.

### TECHNICAL FIELD

Embodiments of this application relate to the field of communication technologies, and more specifically, to a positioning manner determining method and apparatus.

### BACKGROUND

With development of 5th generation (5th generation, 5G), both a to consumer (ToC) service and a to business (ToB) service have high requirements on a location positioning service. Currently, a plurality of positioning manners are defined in 5G. For example, it is stipulated in the 3rd generation partnership project (3rd generation partnership project, 3GPP) that a control plane and a user plane of a 5G core network (5G Core Network, 5GC) can cooperate together to complete a positioning request related to a location of a terminal device. However, when and how to perform positioning is not clearly defined.

### SUMMARY

Embodiments of this application provide a positioning manner determining method and apparatus. In the method, an appropriate positioning manner can be determined based on an actual situation.

According to a first aspect, a positioning manner determining method is provided. The positioning manner determining method may be performed by a core network element, or may be performed by a chip or a circuit used for the core network element. This is not limited in this application. For ease of description, the following uses an example in which the method is performed by the core network element for description.

A positioning manner includes user plane positioning and control plane positioning.

The method includes: The core network element receives a first message, where the first message is used to request to position a terminal device; and the core network element sends a first indication message to the terminal device based on a positioning capability of the terminal device, where the first indication message indicates to use a user plane positioning manner for positioning the terminal device, and the positioning capability of the terminal device indicates a positioning manner supported by the terminal device.

After receiving the first message for requesting to position the terminal device, the core network element indicates, based on the positioning capability of the terminal device, the terminal device to use the user plane positioning manner for positioning the terminal device. In this way, the core network element may determine, based on an actual situation of the terminal device, a positioning manner most suitable for the terminal device, to improve terminal positioning efficiency, reduce signaling overheads, and reduce a positioning latency. In addition, the terminal device may be positioned based on a positioning manner indication delivered by a network side. In this way, the terminal device does not need to listen (listen) to, at any moment, an indication of starting the user plane positioning, so that power consumption of the terminal device can be reduced.

With reference to the first aspect, in some implementations of the first aspect, that the core network element sends a first indication message to the terminal device based on a positioning capability of the terminal device includes: The core network element sends the first indication message to the terminal device based on the positioning capability of the terminal device and first reference information, where the first reference information includes at least one of the following: a pre-configured positioning manner, priorities of the control plane positioning and the user plane positioning, an identity of the terminal device, a data session status of the terminal device, a geographical location of the terminal device, service load of a user plane positioning network element, load of a mobility management network element, positioning quality of service requested for a positioning service, a type of a positioning request client, a type of the positioning service, a positioning type supported by the terminal device, and a positioning mode of the terminal device, where the data session status of the terminal device indicates data session context information on the terminal device.

The core network element may indicate, to the terminal device with reference to the positioning capability of the terminal device and the first reference information, that the terminal device is to be positioned in the user plane positioning manner. In this way, in consideration of a plurality of actual situations (for example, network load and a network deployment status), the core network element may determine the positioning manner most suitable for the terminal device, to further improve the terminal positioning efficiency, reduce the signaling overheads, and reduce the positioning latency.

With reference to the first aspect, in some implementations of the first aspect, that the core network element sends the first indication message to the terminal device based on first reference information includes: The core network element determines, based on the first reference information, to use the user plane positioning manner for positioning the terminal device; and the core network element sends the first indication message to the terminal device.

With reference to the first aspect, in some implementations of the first aspect, the core network element is a location management network element, and the method further includes: The location management network element determines a target user plane positioning network element, where the target user plane positioning network element is a user plane positioning network element that performs user plane positioning communication with the terminal device.

With reference to the first aspect, in some implementations of the first aspect, that the location management network element determines a target user plane positioning network element includes: The location management network element determines the target user plane positioning network element from a plurality of user plane positioning network elements based on second reference information, where the second reference information includes at least one of the following: a pre-configured user plane positioning network element, the identity of the terminal device, the geographical location of the terminal device, the service load of the user plane positioning network element, the positioning quality of service requested for the positioning service, the type of the positioning request client, the type of the positioning service, performance of the user plane positioning network element, the positioning type supported by the terminal device, the positioning mode of the terminal device, and target dedicated network information, where the target dedicated network information indicates a network to which a user plane positioning session used by the terminal device belongs.

When there are a plurality of user plane positioning network elements on the network side, the location management network element may select, from the plurality of user plane positioning network elements based on the second reference information, an appropriate user plane positioning network element, namely, the target user plane positioning network element, as a user plane positioning network element that subsequently participates in a procedure of performing user plane positioning on the terminal device. Therefore, flexibility and scalability are good. In addition, in a subsequent terminal device positioning process, an end-to-end positioning latency can be reduced.

With reference to the first aspect, in some implementations of the first aspect, the first indication message further indicates at least one of the following: an identifier of the target user plane positioning network element, a digital certificate used by the target user plane positioning network element, the target dedicated network information, a type of an ID included by the terminal device in the user plane positioning session, an internet protocol IP address that is reported by the terminal device and that is used by the terminal device in the user plane positioning session, a port ID that is configured by the target user plane positioning network element for the terminal device and that is used for the user plane positioning on the terminal device, and a port ID that is reported by the terminal device and that is used for the user plane positioning on the terminal device.

With reference to the first aspect, in some implementations of the first aspect, the method further includes: The location management network element sends a second message to the target user plane positioning network element, where the second message indicates to perform the user plane positioning on the terminal device.

The location management network element sends, to the target user plane positioning network element, the second message indicating to position the terminal device, so that the target user plane positioning network element establishes a data connection to the terminal device in a timely manner, and completes the user plane positioning on the terminal device.

With reference to the first aspect, in some implementations of the first aspect, that the core network element receives a first message includes: The location management network element receives the first message sent by the mobility management network element, where the first message includes at least one of the following: the positioning mode of the terminal device, the positioning type supported by the terminal device, a user plane positioning capability of the terminal device, the priorities of the control plane positioning and the user plane positioning, and the data session status of the terminal device, where the user plane positioning capability of the terminal device indicates that the terminal device supports the user plane positioning.

With reference to the first aspect, in some implementations of the first aspect, the user plane positioning capability of the terminal device is determined based on at least one of the following: a positioning manner configured for the mobility management network element, the positioning capability of the terminal device, and a positioning manner that the terminal device subscribes to and is authorized.

With reference to the first aspect, in some implementations of the first aspect, that the core network element receives a first message includes: The location management network element receives the first message sent by the mobility management network element, where the first message includes the priorities of the control plane positioning and the user plane positioning, and/or the data session status of the terminal device; and the method further includes: The location management network element sends a request message to the terminal device, where the request message is used to request the terminal device to report a capability of the terminal device; and the location management network element receives a response message sent by the terminal device, where the response message indicates a user plane positioning capability of the terminal device, and the user plane positioning capability of the terminal device indicates that the terminal device supports the user plane positioning.

With reference to the first aspect, in some implementations of the first aspect, the user plane positioning capability of the terminal device is determined based on the positioning capability of the terminal device.

With reference to the first aspect, in some implementations of the first aspect, after that the core network element sends the first indication message to the terminal device based on first reference information, the method further includes: The location management network element receives the IP address used by the terminal device in the user plane positioning session and/or the port ID used for the user plane positioning on the terminal device that are/is sent by the mobility management network element; and the location management network element sends, to the target user plane positioning network element, the IP address used by the terminal device in the user plane positioning session and/or the port ID used for the user plane positioning on the terminal device.

The location management network element forwards, to the target user plane positioning network element, the IP address used by the terminal device in the user plane positioning session and/or the port ID used for the user plane positioning on the terminal device that are/is transmitted by the mobility management network element. In this way, the target user plane positioning network element can actively establish the data connection to the terminal device.

With reference to the first aspect, in some implementations of the first aspect, the core network element is a mobility management network element, and the method further includes: The mobility management network element determines a location management network element, where the location management network element supports the user plane positioning manner; and the mobility management network element sends a second indication message to the location management network element, where the second indication message indicates to use the user plane positioning manner for positioning the terminal device.

With reference to the first aspect, in some implementations of the first aspect, the first indication message further indicates at least one of the following: a digital certificate used by a target user plane positioning network element, a type of an identity ID included by the terminal device in a user plane positioning session, an IP address that is reported by the terminal device and that is used by the terminal device in the user plane positioning session, a port ID that is configured by the target user plane positioning network element for the terminal device and that is used for the user plane positioning on the terminal device, a port ID that is reported by the terminal device and that is used by the terminal device in the user plane positioning session, and target dedicated network information, where the target dedicated network information indicates a network to which the user plane positioning session used by the terminal device belongs.

With reference to the first aspect, in some implementations of the first aspect, after that the core network element sends the first indication message to the terminal device based on first reference information, the method further includes: The mobility management network element receives the IP address used by the terminal device in the user plane positioning session and/or the port ID used for the user plane positioning on the terminal device that are/is sent by the terminal device; and the mobility management network element sends, to the location management network element, the IP address used by the terminal device in the user plane positioning session and/or the port ID used for the user plane positioning on the terminal device.

With reference to the first aspect, in some implementations of the first aspect, the method further includes: The mobility management network element receives an identifier that is of the target user plane positioning network element and that is sent by the location management network element; and the mobility management network element sends the identifier of the target user plane positioning network element to the terminal device.

The mobility management network element forwards, to the terminal device, the identifier that is of the target user plane positioning network element and that is transmitted by the location management network element. In this way, the terminal device can actively establish the data connection to the target user plane positioning network element.

According to a second aspect, a positioning manner determining method is provided. The positioning manner determining method may be performed by a terminal device, or may be performed by a chip or a circuit used for the terminal device. This is not limited in this application. For ease of description, the following uses an example in which the method is performed by the terminal device for description.

A positioning manner includes user plane positioning and control plane positioning.

The method includes: The terminal device receives a first indication message sent by a mobility management network element, where the first indication message indicates to use a user plane positioning manner for positioning the terminal device; and the terminal device establishes a data connection to a target user plane positioning network element.

The terminal device may be positioned based on a positioning manner indication delivered by a network side. In this way, the terminal device does not need to listen (listen) to, at any moment, an indication of starting the user plane positioning, so that power consumption of the terminal device can be reduced.

With reference to the second aspect, in some implementations of the second aspect, the first indication message further indicates at least one of the following: an identifier of the target user plane positioning network element, a digital certificate used by the target user plane positioning network element, a type of an identity ID included by the terminal device in a user plane positioning session, an internet protocol IP address that is reported by the terminal device and that is used by the terminal device in the user plane positioning session, a port ID that is configured by the target user plane positioning network element for the terminal device and that is used for the user plane positioning on the terminal device, a port ID that is reported by the terminal device and that is used for the user plane positioning on the terminal device, and target dedicated network information, where the target user plane positioning network element is a user plane positioning network element that performs user plane positioning communication with the terminal device, and the target dedicated network information indicates a network to which the user plane positioning session used by the terminal device belongs.

With reference to the second aspect, in some implementations of the second aspect, the method further includes: The terminal device sends, to the mobility management network element, the IP address used by the terminal device in the user plane positioning session and/or the port ID used for the user plane positioning on the terminal device.

The terminal device notifies the mobility management network element of the IP address used by the terminal device in the user plane positioning session and/or the port ID used for the user plane positioning on the terminal device, so that the mobility management network element forwards the IP address and/or the port ID to the target user plane positioning network element. In this way, the target user plane positioning network element can actively establish the data connection to the terminal device.

With reference to the second aspect, in some implementations of the second aspect, that the terminal device establishes a data connection to a target user plane positioning network element includes: The terminal device receives a user plane positioning initialization message sent by the target user plane positioning network element, where the user plane positioning initialization message is used to enable the user plane positioning session; and the terminal device establishes the data connection to the target user plane positioning network element.

With reference to the second aspect, in some implementations of the second aspect, that the terminal device establishes the data connection to the target user plane positioning network element includes: The terminal device establishes the data connection to the target user plane positioning network element based on the identifier of the target user plane positioning network element; and the terminal device sends a user plane positioning start message to the target user plane positioning network element, where the user plane positioning start message indicates that the user plane positioning session is enabled.

With reference to the second aspect, in some implementations of the second aspect, the method further includes: The terminal device sends a registration request message to the mobility management network element, where the registration request message includes a user plane positioning capability of the terminal device, and/or priorities of the control plane positioning and the user plane positioning; and the terminal device receives a registration accept message sent by the mobility management network element, where the registration accept message includes: a network in which the terminal device is located supports the user plane positioning capability.

In a process in which the terminal device is registered with the network, the terminal device may notify the mobility management network element of the user plane positioning capability of the terminal device and/or the priorities of control plane positioning and user plane positioning. In this way, the network side can accurately sense a status of the terminal device, to determine whether to use the user plane positioning manner for positioning the terminal device.

With reference to the second aspect, in some implementations of the second aspect, that a network in which the terminal device is located supports the user plane positioning capability is determined based on at least one of the following: a positioning manner configured for the mobility management network element, the user plane positioning capability of the terminal device, and a positioning manner that the terminal device subscribes to and is authorized.

With reference to the second aspect, in some implementations of the second aspect, the transceiver unit is further configured to: receive a request message sent by a location management network element, where the request message is used to request the terminal device to report a capability of the terminal device; and send a response message to the location management network element, where the response message indicates the user plane positioning capability of the terminal device, and the user plane positioning capability of the terminal device indicates that the terminal device supports the user plane positioning.

With reference to the second aspect, in some implementations of the second aspect, the user plane positioning capability of the terminal device is determined based on a positioning capability of the terminal device.

With reference to the second aspect, in some implementations of the second aspect, after that the terminal device establishes a data connection to a target user plane positioning network element, the method further includes: The terminal device obtains positioning measurement information, where the positioning measurement information is used to position the terminal device; and the terminal device sends the positioning measurement information to the target user plane positioning network element.

The obtained positioning measurement information is transmitted to the target user plane positioning network element through a user plane; for the network side, load of a control plane is reduced, a case of service congestion on the control plane can be avoided, and a probability of occurrence of control plane flow control can be reduced; in addition, the positioning measurement information is not frequently transmitted through the control plane, so that overheads of the control plane are reduced; moreover, the user plane is mainly used for data transmission, and the control plane is mainly used for signaling transmission instead of frequently transmitting small data packets. This is more suitable for use of the user plane and the control plane. For the terminal device, network user plane deployment is flexible and a user plane protocol is designed to adapt to small and high-frequency packets. Therefore, for the terminal device, an end-to-end positioning latency can be reduced, and positioning efficiency can be improved.

According to a third aspect, a positioning manner determining apparatus is provided. The apparatus may be a core network element or a chip or a circuit for the core network element. This is not limited in this application.

A positioning manner includes user plane positioning and control plane positioning.

The positioning manner determining apparatus includes a transceiver unit, configured to receive a first message, where the first message is used to request to position a terminal device, where the transceiver unit is further configured to send a first indication message to the terminal device based on a positioning capability of the terminal device, where the first indication message indicates to use a user plane positioning manner for positioning the terminal device, and the positioning capability of the terminal device indicates a positioning manner supported by the terminal device.

With reference to the third aspect, in some implementations of the third aspect, the transceiver unit is further specifically configured to send, for a core network element, the first indication message to the terminal device based on the positioning capability of the terminal device and first reference information, where the first reference information includes at least one of the following: a pre-configured positioning manner, priorities of the control plane positioning and the user plane positioning, an identity of the terminal device, a data session status of the terminal device, a geographical location of the terminal device, service load of a user plane positioning network element, load of a mobility management network element, positioning quality of service requested for a positioning service, a type of a positioning request client, a type of the positioning service, a positioning type supported by the terminal device, and a positioning mode of the terminal device, where the data session status of the terminal device indicates data session context information on the terminal device.

With reference to the third aspect, in some implementations of the third aspect, the apparatus further includes a processing unit, configured to determine, for the core network element based on the first reference information, to use the user plane positioning manner for positioning the terminal device; and the transceiver unit is further configured to send the first indication message to the terminal device.

With reference to the third aspect, in some implementations of the third aspect, the apparatus is a location management network element, and the processing unit is further configured to determine a target user plane positioning network element, where the target user plane positioning network element is a user plane positioning network element that performs user plane positioning communication with the terminal device.

With reference to the third aspect, in some implementations of the third aspect, the processing unit is further specifically configured to determine the target user plane positioning network element from a plurality of user plane positioning network elements based on second reference information, where the second reference information includes at least one of the following: a pre-configured user plane positioning network element, the identity of the terminal device, the geographical location of the terminal device, the service load of the user plane positioning network element, the positioning quality of service requested for the positioning service, the type of the positioning request client, the type of the positioning service, performance of the user plane positioning network element, the positioning type supported by the terminal device, the positioning mode of the terminal device, and target dedicated network information, where the target dedicated network information indicates a network to which the user plane positioning session used by the terminal device belongs.

With reference to the third aspect, in some implementations of the third aspect, the first indication message further indicates at least one of the following: an identifier of the target user plane positioning network element, a digital certificate used by the target user plane positioning network element, the target dedicated network information, a type of an ID included by the terminal device in the user plane positioning session, an internet protocol IP address that is reported by the terminal device and that is used by the terminal device in the user plane positioning session, a port ID that is configured by the target user plane positioning network element for the terminal device and that is used for the user plane positioning on the terminal device, and a port ID that is reported by the terminal device and that is used for the user plane positioning on the terminal device.

With reference to the third aspect, in some implementations of the third aspect, the transceiver unit is further configured to send a second message to the target user plane positioning network element, where the second message indicates to perform the user plane positioning on the terminal device.

With reference to the third aspect, in some implementations of the third aspect, the transceiver unit is further specifically configured to receive, for the location management network element, the first message sent by the mobility management network element, where the first message includes at least one of the following: the positioning mode of the terminal device, the positioning type supported by the terminal device, a user plane positioning capability of the terminal device, the priorities of the control plane positioning and the user plane positioning, and the data session status of the terminal device, where the user plane positioning capability of the terminal device indicates that the terminal device supports the user plane positioning.

With reference to the third aspect, in some implementations of the third aspect, the user plane positioning capability of the terminal device is determined based on at least one of the following: a positioning manner configured for the mobility management network element, the positioning capability of the terminal device, and a positioning manner that the terminal device subscribes to and is authorized.

With reference to the third aspect, in some implementations of the third aspect, the transceiver unit is further specifically configured to receive, for the location management network element, the first message sent by the mobility management network element, where the first message includes the priorities of the control plane positioning and the user plane positioning, and/or the data session status of the terminal device; and the transceiver unit is further configured to: send a request message to the terminal device, where the request message is used to request the terminal device to report a capability of the terminal device; and receive a response message sent by the terminal device, where the response message indicates a user plane positioning capability of the terminal device, and the user plane positioning capability of the terminal device indicates that the terminal device supports the user plane positioning.

With reference to the third aspect, in some implementations of the third aspect, the user plane positioning capability of the terminal device is determined based on a positioning capability of the terminal device.

With reference to the third aspect, in some implementations of the third aspect, the transceiver unit is further configured to: receive the IP address used by the terminal device in the user plane positioning session and/or the port ID used for the user plane positioning on the terminal device that are/is sent by the mobility management network element; and send, to the target user plane positioning network element, the IP address used by the terminal device in the user plane positioning session and/or the port ID used for the user plane positioning on the terminal device.

With reference to the third aspect, in some implementations of the third aspect, the apparatus is a mobility management network element, and the transceiver unit is further configured to: determine a location management network element, where the location management network element supports the user plane positioning manner; and send a second indication message to the location management network element, where the second indication message indicates to use the user plane positioning manner for positioning the terminal device.

With reference to the third aspect, in some implementations of the third aspect, the first indication message further indicates at least one of the following: a digital certificate used by a target user plane positioning network element, a type of an identity ID included by the terminal device in a user plane positioning session, an IP address that is reported by the terminal device and that is used by the terminal device in the user plane positioning session, a port ID that is configured by the target user plane positioning network element for the terminal device and that is used for the user plane positioning on the terminal device, a port ID that is reported by the terminal device and that is used for the user plane positioning on the terminal device, and target dedicated network information, where the target dedicated network information indicates a network to which the user plane positioning session used by the terminal device belongs.

With reference to the third aspect, in some implementations of the third aspect, the transceiver unit is further configured to: receive, from the terminal device, the IP address used by the terminal device in the user plane positioning session and/or the port ID used for the user plane positioning on the terminal device; and send, to the location management network element, the IP address used by the terminal device in the user plane positioning session and/or the port ID used for the user plane positioning on the terminal device.

With reference to the third aspect, in some implementations of the third aspect, the transceiver unit is further configured to: receive an identifier that is of the target user plane positioning network element and that is sent by the location management network element; and send the identifier of the target user plane positioning network element to the terminal device.

According to a fourth aspect, a positioning manner determining apparatus is provided. The apparatus may be a terminal device or a chip or a circuit for the terminal device. This is not limited in this application.

A positioning manner includes user plane positioning and control plane positioning.

The positioning manner determining apparatus includes: a transceiver unit, configured to receive a first indication message sent by a mobility management network element, where the first indication message indicates to use a user plane positioning manner for positioning the terminal device; and a processing unit, configured to establish a data connection to a target user plane positioning network element.

With reference to the fourth aspect, in some implementations of the fourth aspect, the first indication message further indicates at least one of the following: an identifier of the target user plane positioning network element, a digital certificate used by the target user plane positioning network element, a type of an identity ID included by the terminal device in a user plane positioning session, an internet protocol IP address that is reported by the terminal device and that is used by the terminal device in the user plane positioning session, a port ID that is configured by the target user plane positioning network element for the terminal device and that is used for the user plane positioning on the terminal device, a port ID that is reported by the terminal device and that is used for the user plane positioning on the terminal device, and the target dedicated network information, where the target user plane positioning network element is a user plane positioning network element that performs user plane positioning communication with the terminal device, and the target dedicated network information indicates a network to which the user plane positioning session used by the terminal device belongs.

With reference to the fourth aspect, in some implementations of the fourth aspect, the transceiver unit is further configured to send, to the mobility management network element, the IP address used by the terminal device in the user plane positioning session and/or the port ID used for the user plane positioning on the terminal device.

With reference to the fourth aspect, in some implementations of the fourth aspect, the transceiver unit is further configured to receive a user plane positioning initialization message sent by the target user plane positioning network element, where the user plane positioning initialization message is used to enable the user plane positioning session; and the processing unit is further configured to establish the data connection to the target user plane positioning network element.

With reference to the fourth aspect, in some implementations of the fourth aspect, the processing unit is further specifically configured to establish the data connection to the target user plane positioning network element based on the identifier of the target user plane positioning network element; and the transceiver unit is further configured to send a user plane positioning start message to the target user plane positioning network element, where the user plane positioning start message indicates that the user plane positioning session is enabled.

With reference to the fourth aspect, in some implementations of the fourth aspect, the transceiver unit is further configured to: send a registration request message to the mobility management network element, where the registration request message includes a user plane positioning capability of the terminal device, and/or priorities of the control plane positioning and the user plane positioning; and receive a registration accept message sent by the mobility management network element, where the registration accept message includes: a network in which the terminal device is located supports the user plane positioning capability.

With reference to the fourth aspect, in some implementations of the fourth aspect, that a network in which the terminal device is located supports the user plane positioning capability is determined based on at least one of the following: a positioning manner configured for the mobility management network element, the user plane positioning capability of the terminal device, and a positioning manner that the terminal device subscribes to and is authorized.

With reference to the fourth aspect, in some implementations of the fourth aspect, the transceiver unit is further configured to: receive a request message sent by a location management network element, where the request message is used to request the terminal device to report a capability of the terminal device; and send a response message to the location management network element, where the response message indicates the user plane positioning capability of the terminal device, and the user plane positioning capability of the terminal device indicates that the terminal device supports the user plane positioning.

With reference to the fourth aspect, in some implementations of the fourth aspect, the user plane positioning capability of the terminal device is determined based on a positioning capability of the terminal device.

With reference to the fourth aspect, in some implementations of the fourth aspect, the processing unit is further configured to obtain positioning measurement information, where the positioning measurement information is used to position the terminal device; and the transceiver unit is further configured to send the positioning measurement information to the target user plane positioning network element.

According to a fifth aspect, a positioning manner determining apparatus is provided. The apparatus is configured to perform the positioning manner determining method according to any possible implementation of the first aspect. Specifically, the apparatus may include a unit and/or a module configured to perform the positioning manner determining method according to any one of the first aspect or the foregoing implementations of the first aspect, for example, a processing unit and/or a transceiver unit.

In an implementation, the apparatus is a core network element. When the apparatus is the core network element, the transceiver unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit configured in the core network element. When the apparatus is the chip, the chip system, or the circuit configured in the core network element, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

For example, the core network element may be a location management network element or a mobility management network element.

According to a sixth aspect, a positioning manner determining apparatus is provided. The apparatus is configured to perform the positioning manner determining method according to any possible implementation of the second aspect. Specifically, the apparatus may include a unit and/or a module configured to perform the positioning manner determining method according to any one of the second aspect or the foregoing implementations of the second aspect, for example, a processing unit and/or a transceiver unit.

In an implementation, the apparatus is a terminal device. When the apparatus is the terminal device, the transceiver unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit configured in the terminal device. When the apparatus is the chip, the chip system, or the circuit configured in the terminal device, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a seventh aspect, a positioning manner determining apparatus is provided. The apparatus includes: a memory, configured to store a program; and at least one processor, configured to execute the computer program or instructions stored in the memory, to perform the positioning manner determining method according to any possible implementation of the first aspect.

In an implementation, the apparatus is a core network element. In another implementation, the apparatus is a chip, a chip system, or a circuit configured in the core network element.

For example, the core network element may be a location management network element or a mobility management network element.

According to an eighth aspect, a positioning manner determining apparatus is provided. The apparatus includes: a memory, configured to store a program; and at least one processor, configured to execute the computer program or instructions stored in the memory, to perform the positioning manner determining method according to any possible implementation of the second aspect.

In an implementation, the apparatus is a terminal device. In another implementation, the apparatus is a chip, a chip system, or a circuit configured in the terminal device.

According to a ninth aspect, a processor is provided. The processor is configured to perform the positioning manner determining method according to any possible implementation of the first aspect and the second aspect.

Unless otherwise specified, or if the operations such as sending and obtaining/receiving related to the processor do not conflict with actual functions or internal logic of the processor in related descriptions, the operations may be understood as operations such as outputting, receiving, and inputting of the processor, or may be understood as sending and receiving operations performed by a radio frequency circuit and an antenna. This is not limited in this application.

According to a tenth aspect, a computer program product is provided. The computer program product includes a computer program (which may also be referred to as code or instructions). When the computer program is run, a computer is enabled to perform the positioning manner determining method according to any possible implementation of the first aspect and the second aspect.

According to an eleventh aspect, a computer-readable storage medium is provided. The computer-readable storage medium stores a computer program (which may also be referred to as code or instructions). When the computer program is run on a computer, the computer is enabled to perform the positioning manner determining method according to any possible implementation of the first aspect and the second aspect.

According to a twelfth aspect, a chip system is provided. The chip system includes a processor, configured to invoke a computer program from a memory and run the computer program, so that a device on which the chip system is installed performs the positioning manner determining method according to any possible implementation of the first aspect and the second aspect.

Optionally, in an implementation, the chip further includes a memory, the memory stores a computer program or instructions, and the processor is configured to execute the computer program or the instructions stored in the memory. When the computer program is executed or the instructions are executed, the processor is configured to perform the positioning manner determining method according to any possible implementation of the first aspect to the ninth aspect.

According to a thirteenth aspect, a communication system is provided. The communication system includes a core network element and/or a terminal device. The core network element is configured to perform the positioning manner determining method according to any possible implementation of the first aspect; or the terminal device is configured to perform the positioning manner determining method according to any possible implementation of the second aspect.

### BRIEF DESCRIPTION OF DRAWINGS

FIG. 1 is a diagram of an architecture of an example of a communication system according to this application;
FIG. 2 to FIG. 7B are schematic flowcharts of positioning manner determining methods according to an embodiment of this application;
FIG. 8 is a diagram of an example of a packet according to an embodiment of this application;
FIG. 9 is a schematic block diagram of an example of a positioning manner determining apparatus according to an embodiment of this application; and
FIG. 10 is a schematic block diagram of another example of a positioning manner determining apparatus according to an embodiment of this application.

### DESCRIPTION OF EMBODIMENTS

The following describes technical solutions in embodiments of this application with reference to accompanying drawings.

For ease of understanding of embodiments of this application, the following descriptions are first provided before embodiments of this application are described.

First, in embodiments of this application, an "indication" may include a direct indication and an indirect indication, or may include an explicit indication and an implicit indication. Information indicated by a message (for example, a first indication message described below) is referred to as to-be-indicated information. In a specific implementation process, the to-be-indicated information may be indicated in a plurality of manners, for example, but not limited to, a manner of directly indicating the to-be-indicated information. For example, the to-be-indicated information is indicated by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence that is of a plurality of pieces of information and that is pre-agreed on (for example, stipulated in a protocol), to reduce indication overheads to some extent.

Second, the terms "first", "second", and various numbers in the following embodiments are merely used for differentiation for ease of description, and are not used to limit the scope of embodiments of this application, for example, are used for distinguishing between different reference information.

Third, in the following embodiments, "pre-configuration" may be implemented by prestoring corresponding code or a corresponding table in a device (for example, a mobility management network element), or in another manner that can indicate related information. A specific implementation is not limited in this application.

Fourth, in the following embodiments, all messages transmitted between a terminal device and a mobility management network element, between the mobility management network element and a location management network element, and between the mobility management network element and an access network device are transmitted through a control plane. All messages transmitted between the terminal device and a target user plane positioning network element are transmitted through a user plane.

Fifth, in the following embodiments, a user plane positioning network element may complete user plane positioning by using a user plane positioning protocol.

For example, the user plane positioning network element may be an SUPL location platform (SUPL location platform, SLP) or a SUPL location center (SUPL location center, SLC).

For another example, if a location management network element (for example, a location management function (location management function, LMF) network element) may use a user plane positioning protocol (for example, an SUPL protocol), the location management network element may alternatively be the user plane positioning network element in embodiments of this application. In this case, an interaction procedure between the user plane positioning network element and another network element described below is an interaction procedure between the location management network element and the another network element, and an interaction procedure between the location management network element and the user plane positioning network element (for example, the target user plane positioning network element) may not exist.

A specific form of the user plane positioning protocol is not limited in embodiments of this application, provided that the user plane positioning protocol can implement a user plane positioning function. For example, the user plane positioning protocol may be the secure user plane location (secure user plane location, SUPL) protocol.

The technical solutions in embodiments of this application can be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex

(frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

The technical solutions provided in this application can be further applied to a future communication system, for example, a 6th generation mobile communication system. This is not limited in this application.

Usually, a conventional communication system supports a limited quantity of connections, and the connections are easy to implement. However, as communication technologies develop, a mobile communication system supports conventional communication, and further supports, for example, device to device (device to device, D2D) communication, machine to machine (machine to machine, M2M) communication, machine type communication (machine type communication, MTC), and vehicle to everything (vehicle to everything, V2X) communication (which may also be referred to as vehicle-to-everything communication) such as vehicle to vehicle (vehicle to vehicle, V2V) communication (which may also be referred to as vehicle-to-vehicle communication), vehicle to infrastructure (vehicle to infrastructure, V2I) communication (which may also be referred to as vehicle-to-infrastructure communication), vehicle to pedestrian (vehicle to pedestrian, V2P) communication (which may also be referred to as vehicle-to-pedestrian communication), and vehicle to network (vehicle to network, V2N) communication (which may also be referred to as vehicle-to-network communication).

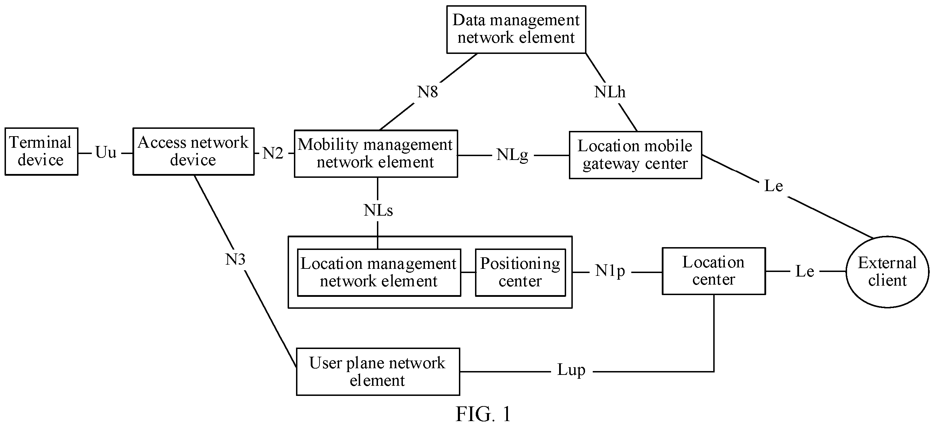

FIG. 1 is a diagram of an architecture of a communication system applicable to an embodiment of this application.

For example, as shown in FIG. 1, the architecture is, for example, a 5th generation system (5th generation system, 5GS). The 5GS includes a terminal device, a (radio) access network ((radio) access network, (R)AN) device, a mobility management network element, a location management network element, a data management (data management) network element, a location mobile gateway center, a user plane positioning center (SUPL positioning center or user plane location center), an external client, a user plane network element, and some devices that are not shown in FIG. 1, for example, a network function repository (network repository function, NRF) device. The device in the 5GS may also be referred to as a 5G core network device.

The following briefly describes the devices shown in FIG. 1:

1. The terminal device may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a voice/data connectivity for a user, for example, a handheld device having a wireless connection function or a vehicle-mounted device. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote surgery (remote surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, or a terminal device in a future evolved public land mobile communication network (public land mobile network, PLMN). This is not limited in embodiments of this application.

By way of example and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that is directly worn or integrated into clothes or an accessory of a user. The wearable device is not merely a hardware device, and further implements a powerful function through software support, data exchanging, and cloud interaction. In a broad sense, intelligent wearable devices include full-featured and large-size devices that can implement complete or partial functions without depending on smartphones, for example, smart watches or smart glasses, and devices that focus on only one type of application functions and need to be used together with other devices such as smartphones, such as various smart bands or smart jewelry used for monitoring physical signs.

In addition, in embodiments of this application, the terminal device may alternatively be a terminal device in an internet of things (internet of things, IoT) system. IoT is an important part of future development of information technologies. A main technical feature of the IoT is connecting a thing to a network by using a communication technology, to implement an intelligent network for human-machine interconnection and thing-thing interconnection.

2. The (R)AN provides a network access function for the terminal device, and can use transmission tunnels with different quality based on a user level, a service requirement, and the like. An access network may be an access network using different access technologies. Currently, there are two types of radio access technologies: a 3GPP access technology (for example, a radio access technology used in a 3G, 4G, or 5G system) and a non-3GPP (non-3GPP) access technology. The 3GPP access technology is an access technology that complies with a 3GPP standard specification. For example, an access network device in a 5G system is referred to as a next generation node base station (next generation Node Base station, gNB). The non-3GPP access technology is an access technology that does not comply with the 3GPP standard specification, for example, an air interface technology represented by an access point (access point, AP) in wireless fidelity (wireless fidelity, Wi-Fi).

An access network that implements an access network function based on a wireless communication technology may be referred to as a radio access network (radio access network, RAN). The radio access network can manage radio resources, provide an access service for a terminal, and further complete forwarding of a control signal and user data between the terminal and a core network.

For example, the access network device includes but is not limited to: a next generation NodeB (gNodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseBand unit, BBU), a transmission reception point (transmission reception point, TRP), a transmission point (transmission point, TP), and a mobile switching center in 5G. Alternatively, the access network device may be a wireless controller in a cloud radio access network (cloud radio access network, CRAN) scenario; or the access network device may be a relay station, an access point, a vehicle-mounted device, a wearable device, a network device in a future 5G network, a network device in a future evolved PLMN, or the like. A specific technology and a specific device form that are used by the radio access network device are not limited in embodiments of this application.

3. The mobility management network element is mainly used for mobility management, access management, and the like, for example, user location updating, user registration with a network, and user handover. For example, the mobility management network element may receive non-access stratum (non-access stratum, NAS) signaling (including mobility management (mobility management, MM) signaling and session management (session management, SM) signaling) of the terminal device and related signaling of the access network device (for example, N2 signaling, at a base station granularity, exchanged with the mobility management network element), to complete a user registration procedure, SM signaling forwarding, and mobility management. The mobility management network element may be further configured to implement a function of a mobility management entity (mobility management entity, MME) other than session management, for example, a lawful interception function or an access authorization (or authentication) function.

In a 5G communication system, the mobility management network element may be an access and mobility management function (access and mobility management function, AMF) network element. In a future communication system, for example, a 6th generation (6th generation, 6G) communication system, the mobility management network element may still be an AMF network element or have another name. This is not limited in this application.

4. The location management network element is responsible for a location-related information service of the terminal device, including providing assistance information for the terminal device to perform location measurement; or processing location measurement information reported by the terminal device or a base station, and calculating final coordinates, a location moving speed, and the like.

In a 5G communication system, the location management network element may be an LMF network element. In a future communication system, for example, a 6G communication system, the mobility management network element may still be an LMF network element or have another name. This is not limited in this application.

5. The data management network element is configured to store user data, such as subscription information and authentication/authorization information.

In a 5G communication system, the data management network element may be a unified data management (unified data management, UDM) network element. In a future communication system, for example, a 6G communication system, the unified data management may still be a UDM network element or have another name. This is not limited in this application.

6. The location mobile gateway center is responsible for interaction between the inside of a 5GC and an external LCS client. Alternatively, the GMCL may be a device that transfers location information.

In a 5G communication system, the location mobile gateway center may be a gateway mobile location center (gateway mobile location center, GMLC) network element. In a future communication system, for example, a 6G communication system, the gateway mobile location center may still be a GMLC network element or have another name. This is not limited in this application.

7. The user plane positioning center is a network element that is responsible for processing all procedures and messages related to location calculation in a user plane positioning network.

It should be noted that the user plane positioning center and the location management network element may be co-deployed or may be separately deployed. This is not limited in this application. For example, in FIG. 1, an example in which the user plane positioning center and the location management network element are co-deployed is used, and this should not constitute a limitation.

In a 5G communication system, the user plane positioning center may be a SUPL positioning center (SUPL positioning center, SPC). In a future communication system, for example, a 6G communication system, the user plane positioning center may still be an SPC or have another name. This is not limited in this application.

8. The user plane location center is a central processing node of a user plane positioning procedure, and is configured to receive, process, and distribute positioning-related procedure messages sent from a network side or a terminal side.

The user plane location center and the user plane positioning center may complete a function of a user plane positioning network element.

It should be noted that the user plane location center and the user plane positioning center may be co-deployed or separately deployed. This is not limited in this application. For example, in FIG. 1, an example in which the user plane location center and the user plane positioning center are separately deployed is used, and this should not constitute a limitation.

In a 5G communication system, the user plane location center may be an SLC. In a future communication system, for example, a 6G communication system, the user plane location center may still be an SLC or have another name. This is not limited in this application.

In a 5G communication system, the user plane positioning network element may be an SLC. In a future communication system, for example, a 6G communication system, the user plane positioning network element may still be an SLC or have another name. This is not limited in this application.

9. The external client is configured to obtain location information of one or more UEs from a 3GPP network.

In a 5G communication system, the external client may be a location service (location service, LCS) client (client) network element. In a future communication system, gateway mobile location center may still be an LCS client network element or have another name. This is not limited in this application.

10. The user plane network element is used for packet routing and forwarding, quality of service (quality of service, QoS) processing of user plane data, and the like.

In a 5G communication system, the user plane network element may be a user plane function (user plane function, UPF) network element. In a future communication system, the user plane network element may still be a UPF network element or have another name. This is not limited in this application.

It may be understood that the network elements or functions may be network elements in a hardware device, may be software functions running on dedicated hardware, or may be virtualized functions instantiated on a platform (for example, a cloud platform). In a possible implementation method, the network elements or functions may be implemented by one device, may be jointly implemented by a plurality of devices, or may be one functional module in one device. This is not specifically limited in embodiments of this application.

In the architecture shown in FIG. 1, the devices may communicate with each other through interfaces shown in the figure. As shown in FIG. 1, a Uu interface is a communication interface between the terminal device and the (R)AN, and is used for communication between the terminal device and the (R)AN. An N2 interface is a communication interface between the access network device and the mobility management network element, and is used for communication between the access network device and the mobility management network element. An N3 interface is a communication interface between the access network device and the user plane network element, and is used for communication between the access network device and the user plane network element. An NLs interface is a communication interface between the mobility management network element and the location management network element, and is used for sending a location positioning request and a response message, and the like. An Lup interface is a communication interface between the user plane network element and the SLC, and is used for communication between the user plane network element and the SLC. An N1p interface is a communication interface between the SPC and the SLC, and is used for communication between the SPC and the SLC. In addition, a relationship between another interface and each device is shown in FIG. 1. For brevity, details are not described herein.

In FIG. 1, Uu, N2, N3, N8, NLs, N1p, Lup, NLh, NLg, Le, and the like are interface sequence numbers. For meanings of the interface sequence numbers, refer to meanings defined in standard protocols of the 3rd generation partnership project (3rd generation partnership project, 3GPP) and the open mobile alliance (open mobile alliance, OMA). This is not limited herein.

It should be noted that the names of the devices and the communication interfaces between the devices in FIG. 1 are briefly described by using names specified in a current protocol as an example. However, this does not mean that embodiments of this application can be applied only to a currently known communication system. Therefore, standard names used when the current protocol is used as an example for description are all functional descriptions. A specific name of a device, an interface, signaling, or the like is not limited in this application, and only represents a function of the device, the interface, or the signaling, and may be correspondingly extended to another system, for example, a 2G, 3G, 4G, 5G, or future communication system.

The architecture that can be used in the embodiment of this application shown in FIG. 1 is merely an example for description, and an architecture applicable to embodiments of this application is not limited thereto. Any architecture that can implement the functions of the foregoing devices is applicable to embodiments of this application.

It should be further understood that the foregoing names are defined merely for distinguishing between different functions, and should not constitute any limitation on this application. This application does not exclude a possibility that another name is used in a 5G network and another future network. For example, in a 6G network, some or all of the foregoing devices may still use the terms in 5G, or may use other names. The names of the interfaces between the devices in FIG. 1 are merely examples. In a specific implementation, the name of the interface may be another name. This is not specifically limited in this application. In addition, names of messages (or signaling) transmitted between the foregoing devices are merely examples, and do not constitute any limitation on functions of the messages.

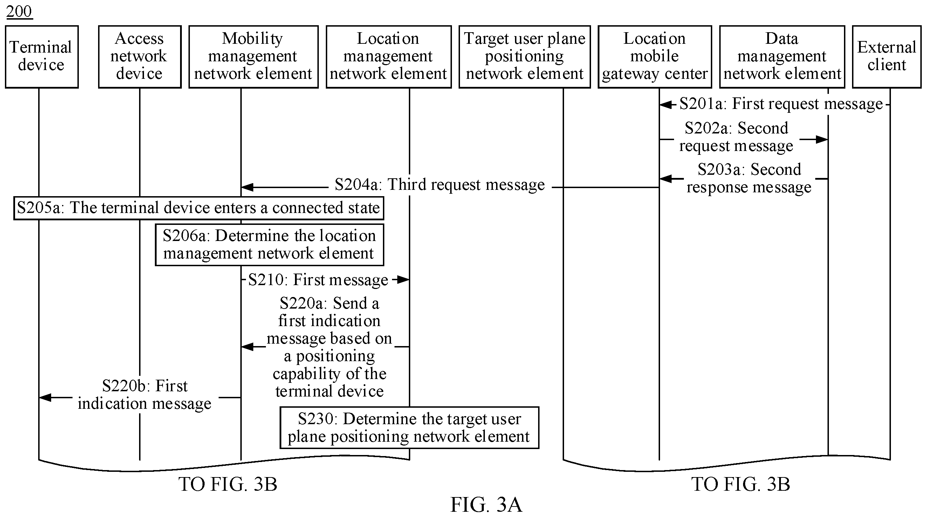

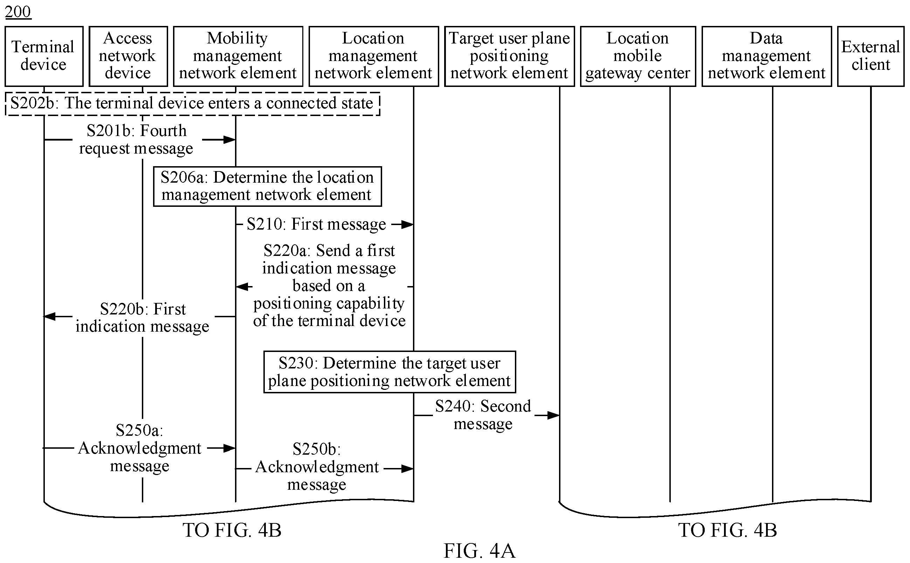

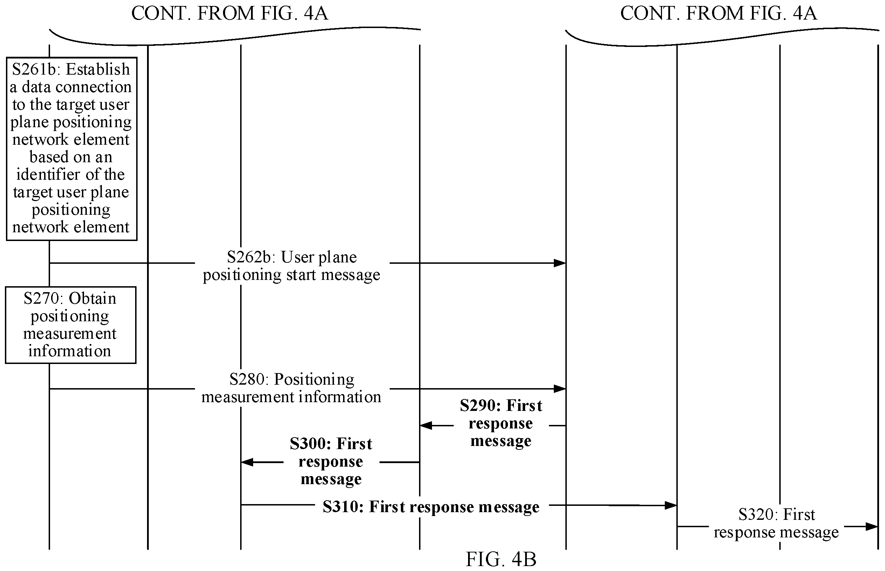

To facilitate understanding of embodiments of this application, terms used in this application are first briefly described.
1. Mobile original (mobile original, MO) positioning procedure: A terminal device actively initiates a positioning request. For example, a positioning procedure shown in FIG. 4A and FIG. 4B is an MO positioning procedure.
2. Mobile terminated (mobile terminated, MT) positioning procedure: A network side actively initiates a positioning request. For example, positioning procedures shown in FIG. 3A, FIG. 3B, and FIG. 5A to FIG. 7B are MT positioning procedures.
3. Control plane positioning: A location management network element obtains, from an access network device through a mobility management network element, information that is measured by the access network device and that is used for positioning the terminal device; and/or the location management network element obtains, from the terminal device through the mobility management network element and the access network device, information that is measured by the terminal device and that is used for positioning the terminal device or a positioning result measured by the terminal device.
4. User plane positioning: The location management network element obtains, from the terminal device through a user plane positioning network element, information that is measured by the terminal device and that is used for positioning the terminal device or a positioning result measured by the terminal device.

The 3GPP stipulates that a control plane and a user plane of a 5GC can cooperate with each other to complete a positioning request related to a location of the terminal device. However, when to use the control plane positioning and when to use the user plane positioning are not clearly defined.

Therefore, embodiments of this application provide a positioning manner determining method. According to the method, a network side may determine, based on an actual situation, a positioning manner most suitable for a terminal device, to improve terminal positioning efficiency, reduce signaling overheads, and reduce a positioning latency. In addition, the terminal device may be positioned based on a positioning manner indication delivered by the network side. In this way, the terminal device does not need to listen (listen) to, at any moment, an indication of starting user plane positioning, so that power consumption of the terminal device can be reduced.

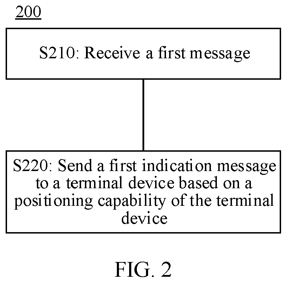

Based on the structure of the communication system in FIG. 1, FIG. 2 is a schematic flowchart of a positioning manner determining method 200 according to an embodiment of this application.

For example, as shown in FIG. 2, the positioning manner determining method 200 includes the following steps.

S210: A core network element receives a first message. The first message is used to request to position a terminal device.

S220: The core network element sends a first indication message to the terminal device based on a positioning capability of the terminal device. Correspondingly, the terminal device receives the first indication message sent by the core network element.

The positioning capability of the terminal device indicates a positioning manner supported by the terminal device. Because the positioning manner includes user plane positioning and/or control plane positioning, the positioning manner that is supported by the terminal device and that is indicated by the positioning capability of the terminal device includes the user plane positioning and/or the control plane positioning.

The first indication message indicates to use a user plane positioning manner for positioning the terminal device.

The core network element is not limited in embodiments of this application. For example, the core network element may be the location management network element or the mobility management network element shown in FIG. 1.

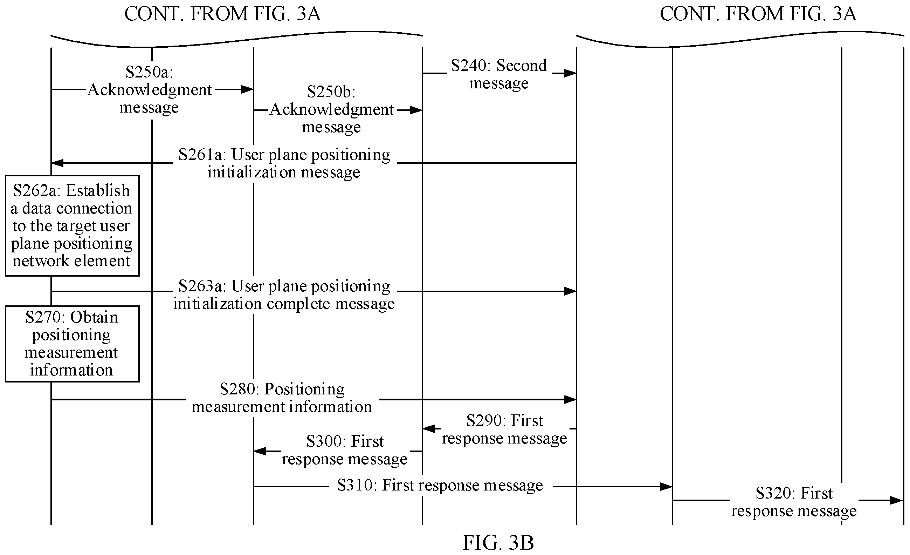

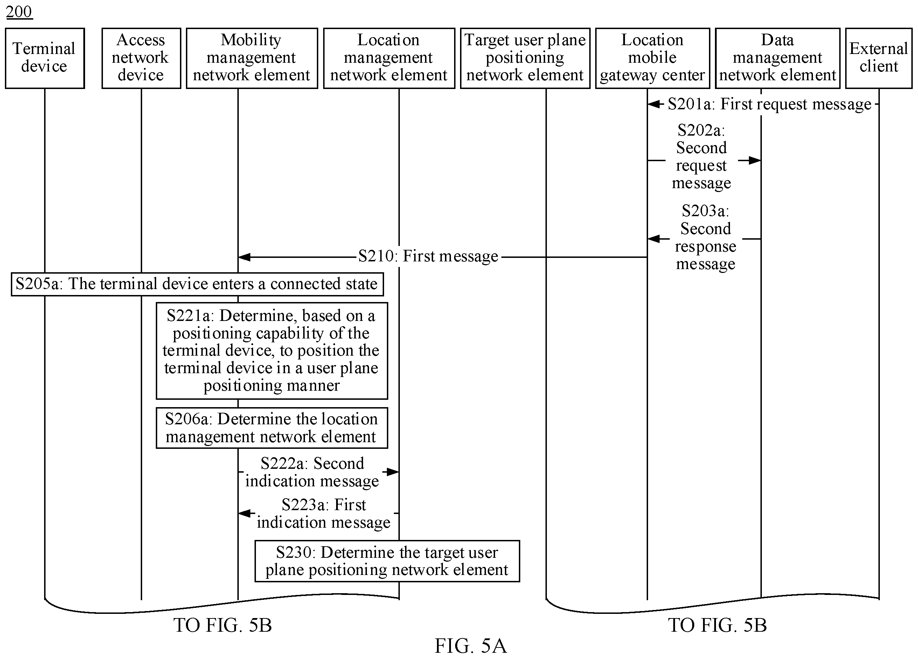

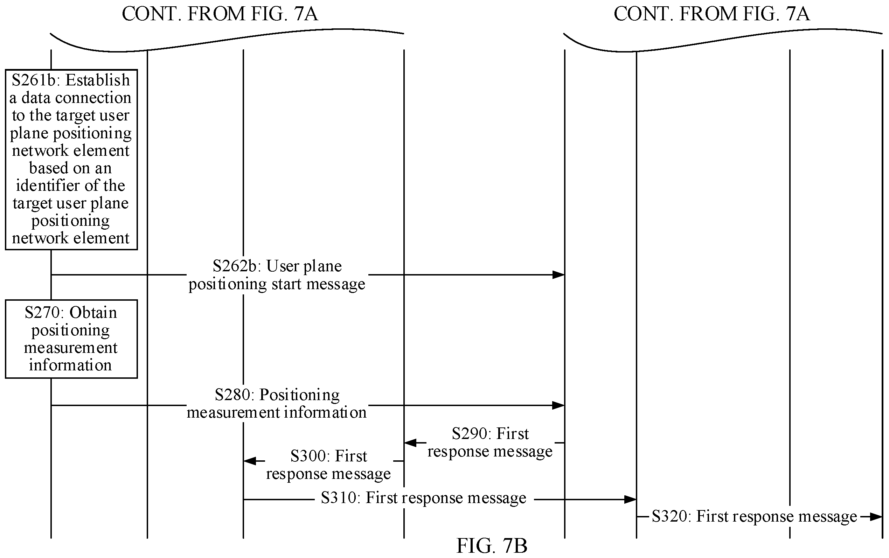

With reference to FIG. 3Ato FIG. 7B, the following describes in detail the positioning manner determining method 200 shown in FIG. 2. FIG. 3A, FIG. 3B, FIG. 4A, and FIG. 4B are schematic flowcharts of the positioning manner determining method 200 by using an example in which the core network element shown in FIG. 2 is the location management network element. FIG. 5A to FIG. 7B are schematic flowcharts of the positioning manner determining method 200 by using an example in which the core network element shown in FIG. 2 is the mobility management network element.

For example, as shown in FIG. 3A, FIG. 3B, FIG. 4A, and FIG. 4B, the positioning manner determining method 200 includes the following steps.

S210: The location management network element receives a first message.

In an example, the first message may be transmitted to the location management network element in the foregoing MT positioning procedure.

For example, an external client triggers S210. Specifically, as shown in FIG. 3A and FIG. 3B, before S210, the method 200 further includes the following steps.

S201a: The external client sends a first request (for example, LCS Service Request) message to the location mobile gateway center. Correspondingly, the location mobile gateway center receives the first request message sent by the external client.

The first request message is used to request a location of the terminal device, and the first request message further indicates an identifier of the terminal device or an identifier of a group to which the terminal device belongs. A specific form of the identifier of the terminal device or the identifier of the group to which the terminal device belongs is not limited in embodiments of this application.

S202a: The location mobile gateway center sends a second request message to the data management network element. Correspondingly, the data management network element receives the second request message sent by the location mobile gateway center.

The second request message is used to request a mobility management network element accessed by the terminal device. The second request message further indicates the identifier that is of the terminal device or the identifier that is of the group to which the terminal device belongs and that is indicated by the first request message.

The terminal device included in the group corresponding to the identifier of the group may be obtained by using the identifier of the group to which the terminal device belongs.

S203a: The data management network element sends a second response (for example, Nudm_UECM_Get/Nudm_UECM_Response) message to the location mobile gateway center. Correspondingly, the location mobile gateway center receives the second response message sent by the data management network element.

The second response message includes an identifier of the mobility management network element accessed by the terminal device. A specific form of the identifier of the mobility management network element accessed by the terminal device is not limited in embodiments of this application.

S204a: The location mobile gateway center sends a third request (for example, Namf_Location_ProvidePositioningInfo_Request) message to the mobility management network element. Correspondingly, the mobility management network element receives the third request message sent by the location mobile gateway center.

It should be understood that a receiver of the third request message, namely, the mobility management network element, is the mobility management network element corresponding to the identifier that is of the mobility management network element accessed by the terminal device and that is indicated by the second response message.

After receiving the third request message, the mobility management network element determines whether the terminal device indicated by the third request message is in a connected state.

If the mobility management network element determines that the terminal device indicated by the third request message is in the connected state, the mobility management network element performs S206a.

If the mobility management network element determines that the terminal device indicated by the third request message is in an idle state, the mobility management network element may trigger a procedure in which the terminal device enters a connected state that is triggered by a network side. Specifically, the mobility management network element, an access network device, and the terminal device interact with each other, so that the terminal device enters a connected state (Network Triggered Service Request), that is, S205a. Further, the mobility management network element performs S206a.

Optionally, if the terminal device needs to determine whether the terminal device has permission to position the terminal device, the mobility management network element and the terminal device may determine, by using a non-access stratum location notification invoke request (for example, NAS_Location_Notification_Invoke_Request) and a return result (for example, NAS_Location_Notification_Retum_Result), whether the terminal device has the permission to position the terminal device.

S206a: The mobility management network element determines a location management network element.

For example, the location management network element may support a user plane positioning manner.

The location management network element is a location management network element that subsequently participates in a procedure of performing user plane positioning on the terminal device. In other words, the location management network element is the location management network element in S210 shown in FIG. 3A, FIG. 3B, FIG. 4A, and FIG. 4B.

For example, the mobility management network element may obtain, based on a local configuration or from an NRF, a location management network element that supports the user plane positioning manner, as the location management network element that subsequently participates in the procedure of performing user plane positioning on the terminal device.

After S206a, the mobility management network element sends the first message (for example, an Nlmf_Location_DetermineLocation Request) to the location management network element.

Correspondingly, the location management network element receives the first message sent by the mobility management network element, that is, S210.

Optionally, the first message includes at least one of the following: priorities of control plane positioning and the user plane positioning, and a data session status of the terminal device.

In this case, the location management network element may interact with the terminal device to obtain a capability of the terminal device. Specifically, the location management network element sends a request message to the terminal device, where the request message is used to request the terminal device to report the capability of the terminal device; and the location management network element receives a response message sent by the terminal device, where the response message indicates a user plane positioning capability of the terminal device, and the user plane positioning capability of the terminal device indicates that the terminal device supports the user plane positioning.

In an example, the request message or the response message may be directly transmitted between the location management network element and the terminal device.

In another example, the request message or the response message may be transmitted between the location management network element and the terminal device through another network element. The another network element is not limited in embodiments of this application. For example, the another network element may be a mobility management network element or a user plane positioning network element.

For example, the user plane positioning capability of the terminal device is determined based on a positioning capability of the terminal device.

Optionally, in some embodiments, the response message described above may further indicate positioning modes (positioning modes) of the terminal device and positioning types supported by the terminal device.

For example, the positioning modes of the terminal device may include a terminal device-based (UE-Based) positioning mode, a terminal device-assisted (UE-Assisted) positioning mode, and a standalone (standalone) positioning mode.

In the terminal device-based positioning mode, the terminal device obtains positioning measurement data, and calculates the location of the terminal device based on the obtained positioning measurement data. Optionally, in some embodiments, the terminal device may obtain assistance data (assistance data) from the network side, where the assistance data may assist in calculating the location of the terminal device.

In the terminal device-assisted positioning mode: The terminal device obtains positioning measurement data, and sends the positioning measurement data to another network element (for example, a location management function device), so that the another network element calculates the location of the terminal device.

In the standalone positioning mode, the terminal device obtains positioning measurement data, and calculates the location of the terminal device based on the obtained positioning measurement data. In this case, network side assistance is not needed. For example, the terminal device does not need to obtain assistance data (assistance data) from the network side.

A manner of obtaining the positioning measurement data by the terminal device in the positioning modes of the terminal device is not limited in embodiments of this application. For example, the terminal device may obtain the positioning measurement data based on the positioning type supported by the terminal device.

It should be noted that the positioning type supported by the terminal device may be understood as a type of a positioning method (positioning method) supported by the terminal device.

For example, the positioning types supported by the terminal device include the following methods.

### (1) Positioning method based on an air interface signal in 5G, 4G, 3G, or the like

For example, the positioning method based on an air interface signals in 5G, 4G, 3G, or the like may be an observed time difference of arrival (observed time difference of arrival, OTDOA) positioning method. In the OTDOA positioning method, a signal of an access network device is used. A time difference between arrival of measurement signals of different communication access network devices at a measured terminal device, or a time difference between arrival of a measurement signal of a measured terminal device at different communication access network devices is observed to obtain a location of the terminal device through solving.

For another example, the positioning method based on an air interface signal in 5G, 4G, 3G, or the like may be an angle of arrival (angle of arrival, AOA) or angle of departure (angle of departure, AOD) positioning method. In the AOA positioning method, a location of a terminal device is obtained through solving by using an angle at which a measurement signal of the measured terminal device arrives at an antenna of a communication access network device. In the AOD positioning method, a location of a terminal device is obtained through solving by using an angle at which a measurement signal of a communication access network device leaves an antenna of the communication access network device and arrives at the measured terminal device.

### (2) Global navigation satellite system (global navigation satellite system, GNSS)-based positioning method

A GNSS signal receiver is mounted on a measured terminal device, and a location of the terminal device is positioned by solving a signal of a global navigation satellite system.

### (3) Terrestrial beacon system (terrestrial beacon system, TBS)-based positioning method

The 3GPP uses a TBS as a general term for a terrestrial positioning system that broadcasts a positioning-only radio signal. For this system, terrestrial positioning base stations are used to construct a positioning network. A positioning receiver implements positioning by receiving and solving a positioning signal broadcast by an access network device. Different systems may use different positioning signals. However, for most systems, a location of a receiver is solved by using a trilateration algorithm based on a measurement value of a time difference of arrival (time difference of arrival, TDOA) or time of arrival (time of arrival, TOA) between positioning signals.

### (4) Wireless communication technology-based positioning method

In the wireless communication technology-based positioning method, a location of a measured terminal device may be obtained, based on a wireless communication signal, through solving by using a time of flight (time of flight, TOF) technology, a TDOA technology, or the like.

A form of the wireless communication technology is not limited in embodiments of this application. For example, the wireless communication technology may be a Bluetooth communication technology or a wireless local area network (wireless local area network, WLAN) communication technology.

### (5) Sensor-based positioning method

In the sensor-based positioning method, information such as a location of a measured terminal device is solved by using a sensor inside the terminal device.

A type of the sensor is not limited in embodiments of this application. For example, the sensor may include an inertia measurement unit (Inertial measurement unit, IMU), a lidar sensor, a visual sensor, and a barometer.

Optionally, in some embodiments, the request message may be referred to as a request capabilities (request capabilities) message. The response message may be referred to as a provide capabilities (provide capabilities) message.

In another example, the first message may be transmitted to the location management network element in the foregoing MO positioning procedure.

For example, the terminal device triggers S210. Specifically, as shown in FIG. 4A and FIG. 4B, before S210, the method 200 further includes the following steps.

S201b: The terminal device sends a fourth request (for example, MO-LR Request) message to a mobility management network element. Correspondingly, the mobility management network element receives the fourth request message sent by the terminal device.

The fourth request message is used to request to position the terminal device.

In an example, the fourth request message may further indicate positioning modes of the terminal device and/or positioning types supported by the terminal device. In this way, the mobility management network element subsequently includes the positioning modes of the terminal device and/or the positioning types supported by the terminal device in the first message, and sends the first message to the location management network element in S210.

For example, the fourth request message may be transmitted by using an uplink non-access-stratum (non-access-stratum, NAS) message (UL NAS TRANSPORT).

If the terminal device is in a connected state, the terminal device directly performs S201b.

If the terminal device is in an idle state, the terminal device may trigger the terminal device to enter a connected state procedure. Specifically, the mobility management network element, an access network device, and the terminal device interact with each other, so that the terminal device enters the connected state (Service Request), that is, S202b. Then, the terminal device performs S201b. After S201b, S206a may further be performed. In this case, a type of a positioning request client and QoS requested for a positioning service in S206 may be transmitted by the terminal device to the mobility management network element in S201b. An access network type may be transmitted by the access network device to the mobility management network element. For other related descriptions of S206a, refer to the foregoing descriptions. Details are not described herein again.

After S206a, the mobility management network element sends the first message (for example, an Nlmf_Location_DetermineLocation Request) to the location management network element. Correspondingly, the location management network element receives the first message sent by the mobility management network element, that is, S210.

Optionally, the first message may include at least one of the following: the positioning mode of the terminal device, the positioning type supported by the terminal device, a user plane positioning capability of the terminal device, priorities of control plane positioning and user plane positioning, and a data session status of the terminal device, where the user plane positioning capability of the terminal device indicates that the terminal device supports the user plane positioning.

For example, the mobility management network element locally has the user plane positioning capability of the terminal device.

In an example, the user plane positioning capability of the terminal device may be pre-configured in the mobility management network element.

In another example, the user plane positioning capability of the terminal device is transmitted by the terminal device to the mobility management network element. For example, the terminal device may send a positioning capability of the terminal device to the mobility management network element in a process in which the terminal device is registered with the mobility management network element. Specifically, the terminal device sends a registration request message to the mobility management network element. The registration request message includes the user plane positioning capability of the terminal device.

Further, the mobility management network element may further determine that a network in which the terminal device is located supports the user plane positioning capability, and feed back, to the terminal device by using a registration accept message, that the network in which the terminal device is located supports the user plane positioning capability. Specifically, the mobility management network element sends the registration accept message to the terminal device. The registration accept message includes: the network in which the terminal device is located supports the user plane positioning capability.

For example, the mobility management network element determines the user plane positioning capability of the terminal device based on at least one of the following: a positioning manner configured for the mobility management network element, the positioning capability of the terminal device, and a positioning manner that the terminal device subscribes to and is authorized.

For example, the priorities of the control plane positioning and the user plane positioning may alternatively be sent to the mobility management network element in the process in which the terminal device is registered with the mobility management network element. In other words, the registration request message includes the priorities of the control plane positioning and the user plane positioning.

For example, in some embodiments, if the mobility management network element corrects the priorities of the control plane positioning and the user plane positioning, the mobility management network element may include corrected priorities of the control plane positioning and the user plane positioning in the registration accept message, and send the registration accept message to the terminal device. In this case, the priorities of the control plane positioning and the user plane positioning that are included in the first message sent by the mobility management network element to the location management network element may be the corrected priorities of the control plane positioning and the user plane positioning.

S220: The location management network element sends a first indication message to the terminal device based on the positioning capability of the terminal device. Correspondingly, the terminal device receives the first indication message sent by the location management network element.

That the location management network element sends a first indication message to the terminal device may include: The location management network element first sends the first indication message to the mobility management network element, that is, S220a shown in FIG. 3A, FIG. 3B, FIG. 4A, and FIG. 4B. In this case, the first indication message in S220a may be, for example, an N1N2 message transfer container message (Namf_Communication_N1N2MessageTransfer). Then, the mobility management network element forwards the first indication message to the terminal device, that is, S220b shown in FIG. 3A, FIG. 3B, FIG. 4A, and FIG. 4B. In this case, the first indication message in S220b may be, for example, transmitted by using a downlink NAS message (DLNAS TRANSPORT).

In some embodiments, S220 may specifically include: The location management network element first determines, based on the positioning capability of the terminal device, whether to use a user plane positioning manner for positioning the terminal device. Then, when determining to use the user plane positioning manner for positioning the terminal device, the location management network element sends the first indication message to the terminal device.

In an example, provided that the positioning manner supported by the terminal device and indicated by the positioning capability of the terminal device includes the user plane positioning, the location management network element may determine to use the user plane positioning manner for positioning the terminal device.

For example, if the positioning manner supported by the terminal device includes only the user plane positioning, the location management network element may determine to use the user plane positioning manner for positioning the terminal device.

For another example, if the positioning manner supported by the terminal device includes the user plane positioning and the control plane positioning, the location management network element may determine to use the user plane positioning manner for positioning the terminal device.

In another example, provided that the positioning manner supported by the terminal device and indicated by the positioning capability of the terminal device includes the control plane positioning, the location management network element may determine that the terminal device cannot be positioned in the user plane positioning manner.

For example, if the positioning manner supported by the terminal device includes the user plane positioning and the control plane positioning, the location management network element may determine that the terminal device cannot be positioned in the user plane positioning manner.

For another example, if the positioning manner supported by the terminal device includes only the control plane positioning, the location management network element may determine that the terminal device cannot be positioned in the user plane positioning manner. In this case, the terminal device may be positioned in a control plane positioning manner.

In some other embodiments, S220 may specifically include: The location management network element sends the first indication message to the terminal device based on the positioning capability of the terminal device and first reference information.

For example, the first reference information includes at least one of the following: a pre-configured positioning manner, the priorities of the control plane positioning and the user plane positioning, an identity of the terminal device, the data session status of the terminal device, a geographical location of the terminal device, service load of a user plane positioning network element, load of the mobility management network element, the positioning quality of service requested for the positioning service, the type of the positioning request client (LCS client type), a type of the positioning service (position service type), the positioning type supported by the terminal device, and the positioning mode of the terminal device, where the data session status of the terminal device indicates data session context information on the terminal device.

For example, the positioning quality of service may include at least one of the following: a positioning dimension, positioning precision, confidence of the positioning precision, and positioning frequency.

For example, the positioning dimension may include three-dimensional positioning, two-dimensional positioning, and one-dimensional positioning.

For example, the positioning precision may include: the positioning precision is less than or equal to 0.01 m, the positioning precision is less than or equal to 0.1 m, the positioning precision is less than or equal to 0.5 m, the positioning precision is less than or equal to 1 m, a range of the positioning precision is 1 m to 3 m, and the positioning precision is greater than or equal to 3 m.

For example, the confidence of the positioning precision includes: circular error probable (circular error probable, CEP), where 1 m CEP indicates that accuracy of 50% of test points can reach within 1 m; a standard deviation (distance root mean square, DRMS) probability, which indicates a 1-time standard deviation probability and is 67%; a 2-times standard deviation 2DRMS probability, which is 95%; and a custom error evaluation method.

For example, the positioning frequency may be a quantity of positioning times per second.

Specifically, the location management network element first determines, based on the positioning capability of the terminal device and the first reference information, whether to use the user plane positioning manner for positioning the terminal device. Then, when determining to use the user plane positioning manner for positioning the terminal device, the location management network element sends the first indication message to the terminal device.

In an example, the location management network element first determines, based on the first reference information, whether to use the user plane positioning manner for positioning the terminal device, and determines, based on the positioning capability of the terminal device, whether to use the user plane positioning manner for positioning the terminal device. Then, when determining, separately based on the first reference information and the positioning capability of the terminal device, to use the user plane positioning manner for positioning the terminal device, the location management network element sends the first indication message to the terminal device.

In another example, the location management network element first determines, based on the positioning capability of the terminal device, whether to use the user plane positioning manner for positioning the terminal device, and determines, based on the first reference information, whether to use the user plane positioning manner for positioning the terminal device. Then, when determining, based on the first reference information or the positioning capability of the terminal device, to use the user plane positioning manner for positioning the terminal device, the location management network element sends the first indication message to the terminal device.

It should be noted that when the first reference information includes at least two of the items described above, how the location management network element determines, based on the first reference information, that the terminal device may be positioned in the user plane positioning manner is not limited in embodiments of this application. In an example, provided that the location management network element determines, based on one item included in the first reference information, that the terminal device may be positioned in the user plane positioning manner, it may be considered that the location management network element determines, based on the first reference information, that the terminal device may be positioned in the user plane positioning manner. In another example, that the location management network element determines, based on at least two items included in the first reference information, that the terminal device may be positioned in the user plane positioning manner, it may be considered that the location management network element determines, based on the first reference information, that the terminal device may be positioned in the user plane positioning manner.

The following describes, by using an example in which the first reference information includes one of the items described above, how the location management network element determines, based on the first reference information, whether to use the user plane positioning manner for positioning the terminal device.

### (1) Pre-configured positioning manner

For example, whether the positioning manner is the user plane positioning or the control plane positioning may be pre-configured in a pre-configuration manner, such as through operations, administration and maintenance (operations, administration and maintenance, OAM), pre-configuration (pre-configuration), or local configuration (local configuration). Further, based on the pre-configured positioning manner, the location management network element determines, when the pre-configured positioning manner is the user plane positioning, to use the user plane positioning manner for positioning the terminal device.

### (2) Priorities of the control plane positioning and the user plane positioning

For example, the priorities of the control plane positioning and the user plane positioning may be pre-configured in a pre-configuration manner, such as through OAM, pre-configuration (pre-configuration), or local configuration. In this way, based on the pre-configured priorities of the control plane positioning and the user plane positioning, the location management network element determines, when the priority of the user plane positioning is higher than the priority of the control plane positioning, to use the user plane positioning manner for positioning the terminal device.

A manner of pre-configuring the priorities of the control plane positioning and the user plane positioning is not limited in embodiments of this application. For example, a level of the priority of the control plane positioning and a level of the priority of the user plane positioning may be pre-configured. For another example, levels of the priority of the control plane positioning and the priority of the user plane positioning may be pre-configured.

### (3) Identity of the terminal device

For example, a correspondence between the identity of the terminal device and a positioning manner may be pre-configured in a pre-configuration manner, such as through OAM, pre-configuration (pre-configuration), or local configuration. Further, when the identity of the terminal device corresponds to the user plane positioning manner, the location management network element may determine to use the user plane positioning manner for positioning the terminal device.

A specific representation form of the identity of the terminal device is not limited in embodiments of this application.

In an example, the identity of the terminal device may include an identity of the terminal device itself.

For example, the identity of the terminal device may be an IP address, a permanent equipment identifier (permanent equipment identifier, PEI) (a terminal device identifier in 5G), or an international mobile equipment identity (international mobile equipment identity, IMEI) (a terminal device identifier in 4G) of the terminal device.

For example, it may be pre-configured that the user plane positioning is used for an IP address in a first IP address range, and the control plane positioning is used for an IP address in a second IP address range. If the IP address of the terminal device belongs to the first IP address range, the terminal device uses the user plane positioning. If the IP address of the terminal device belongs to the second IP address range, the terminal device uses the control plane positioning.

In another example, the identity of the terminal device may include an identity of a subscriber identity module (subscriber identity module, SIM) card of the terminal device.

For example, the identity of the SIM card may be a subscription permanent identifier (subscription permanent identifier, SUPI) (a terminal SIM card identifier in 5G), an international mobile subscriber identity (international mobile subscriber identity, IMSI) (a terminal SIM card identifier in 4G), a generic public subscription identifier (generic public subscription identifier, GPSI) (a mobile phone number in 5G), or a mobile subscriber integrated services digital network (mobile subscriber integrated services digital network, MSISDN) (a mobile phone number in 4G). The SUPI may be a 15-digit number including digits 0 to 9 based on a specific format. The GPSI may be an 11-digit number including digits 0 to 9 based on a specific format.

For example, it may be pre-configured that the user plane positioning is used for an SUPI in a first SUPI segment range, and the control plane positioning is used for an SUPI segment in a second SUPI segment range. If the SUPI of the terminal device belongs to the first SUPI segment range, the user plane positioning is used for the terminal device. If the SUPI of the terminal device belongs to the second SUPI segment range, the control plane positioning is used for the terminal device.

### (4) Data session status of the terminal device

The data session status of the terminal device indicates the data session context information on the terminal device. In other words, the data session status of the terminal device indicates related information of a data channel that has been established on the terminal device.

For example, if a data session of the terminal device includes a user plane data session, the location management network element determines that the terminal device may be positioned in the user plane positioning manner. If a data session of the terminal device does not include a user plane data session, the location management network element determines that the terminal device cannot be positioned in the user plane positioning manner.

For example, in a 3G communication system, the data session in embodiments of this application may be a packet data protocol (packet data protocol, PDP) session. In a 4G communication system, the data session in embodiments of this application may be a packet data network (packet data network, PDN) session. In a 5G communication system, the data session in embodiments of this application may be a protocol data unit (protocol data unit, PDU) session.

### (5) Geographical location of the terminal device

For example, a correspondence between a geographical location and a positioning manner may be pre-configured, so that the location management network element may determine, when the geographical location of the terminal device corresponds to the user plane positioning manner, to use the user plane positioning manner for positioning the terminal device.

For example, it may be pre-configured that a positioning manner corresponding to a tracking area (tracking area, TA) 1 is the user plane positioning, and a positioning manner corresponding to a TA 2 is the control plane positioning. The location management network element and the user plane positioning network element that correspond to the TA 1 are close to the access network device, and a positioning latency can be reduced when the user plane positioning is used. The location management network element and the user plane positioning network element that correspond to the TA 2 are far away from the access network device and are located in a central equipment room, and the control plane positioning manner is used. If the geographical location of the terminal device is located in the TA 1, the user plane positioning may be used for the terminal device. If the geographical location of the terminal device is located in the TA 2, the control plane positioning may be used for the terminal device.

### (6) Service load of the user plane positioning network element

For example, if the service load of the current user plane positioning network element does not exceed a first preset value, it is determined that the user plane positioning may be used for the terminal device. In other words, if a service of the current user plane positioning network element is in an unsaturated state, to be specific, the service that currently performs communication through a user plane is not saturated, the terminal device may be positioned through the user plane.

On the contrary, if the service load of the current user plane positioning network element exceeds the first preset value, it is determined that the user plane positioning cannot be used for the terminal device. For example, the control plane positioning may be used for the terminal device. In other words, if the service of the current user plane positioning network element is in a saturated state, to be specific, the service that currently performs communication through the user plane is saturated, the terminal device is prohibited from being positioned through the user plane. For example, the terminal device may be positioned through a control plane.

The first preset value may be preset.

### (7) Load of the mobility management network element

For example, if service load of the current mobility management network element exceeds a second preset value, it is determined that the user plane positioning may be used for the terminal device. In other words, if a service of the current mobility management network element is in the saturated state, to be specific, the service that currently performs communication through the control plane is saturated, the terminal device may be prohibited from being positioned through the control plane. For example, the terminal device may be positioned through the user plane.

On the contrary, if the service load of the current mobility management network element does not exceed the second preset value, it is determined that the user plane positioning cannot be used for the terminal device. For example, the control plane positioning may be used for the terminal device. In other words, if the service of the current mobility management network element is in the unsaturated state, to be specific, the service that currently performs communication through the control plane is not saturated, the terminal device may be positioned through the control plane.

The second preset value may be preset.

### (8) Positioning quality of service requested for the positioning service

For example, a correspondence between positioning quality of service and a positioning manner may be pre-configured in a pre-configuration manner, such as through OAM, pre-configuration (pre-configuration), or local configuration. Further, when the positioning quality of service requested for the current positioning service corresponds to the user plane positioning manner, the location management network element may determine to use the user plane positioning manner for positioning the terminal device.

For example, it may be pre-configured that the control plane positioning is used for a latency-insensitive positioning service, and the user plane positioning is used for a latency-sensitive positioning service. The control plane positioning may be performed for a single time. The user plane positioning may be performed for a plurality of times with reference to edge computing.

### (9) Type of the positioning request client

It should be understood that the positioning request client actively initiates a positioning procedure. For example, in an MT positioning procedure, the positioning request client is an external client. For another example, in an MO positioning procedure, the positioning request client is a terminal device.

For example, a correspondence between a type of a positioning request client and a positioning manner may be pre-configured. Further, when the type of the positioning request client corresponds to the user plane positioning manner, the location management network element may determine to use the user plane positioning manner for positioning the terminal device.

For example, if the positioning request client is an external client, the type of the request client may include: an external client for emergency services (external client for emergency services), an external client for value-added services (external client for value added services), an external client for operator services (external client for PLMN operator services), and an external client for lawful interception services of operator services, which may correspond to the user plane positioning.

### (10) Type of the positioning service

For example, a correspondence between a type of a positioning service and a positioning manner may be pre-configured. Further, when the type of the positioning service corresponds to the user plane positioning manner, the location management network element may determine to use the user plane positioning manner for positioning the terminal device.

For example, it may be pre-configured that a single-time positioning service corresponds to the control plane positioning, and a service of a positioning procedure triggered by a periodic event corresponds to the user plane positioning.

### (11) Positioning type supported by the terminal device

For example, it may be pre-configured as follows: For an IMU-based positioning method, because measurement data generated using the method is highly frequent, the user plane positioning may be preferentially used in this case. For a positioning method based on a sensor such as a barometer, because measurement data generated using the method is not highly frequent, both the control plane positioning and the user plane positioning may be used in the same case. For a positioning method based on an air interface signal in 5G, 4G, 3G, or the like, or a wireless communication technology-based positioning method, if frequency of reporting positioning measurement data by an access network device is limited to be high, the user plane positioning may be preferentially used in the same case. If frequency of reporting positioning measurement data by an access network device is limited to be low, both the control plane positioning and the user plane positioning may be used.

### (12) Positioning mode of the terminal device

For example, it may be pre-configured as follows: In a terminal device-based positioning mode or a standalone positioning mode, when load of the control plane is not high, the control plane positioning is preferentially used. In a terminal device-based positioning mode, when user plane load is not high, the user plane positioning is preferentially used.

In this way, when there is little interaction between the terminal device and the network side, the control plane positioning is preferentially used, so that resources can be properly used, and a transmission rate can be improved. When there is much interaction between the terminal device and the network side, the user plane positioning is used as much as possible. In this way, for the network side, load and overheads of the control plane can be reduced, a case of service congestion on the control plane can be avoided, and a probability of occurrence of control plane flow control can be reduced. For the terminal device, network user plane deployment is flexible and a user plane protocol is designed to adapt to small and high-frequency packets. Therefore, for the terminal device, an end-to-end positioning latency can be reduced, and positioning efficiency can be improved.

In some other embodiments, the positioning capability of the terminal device in S220 may be alternatively replaced with the first reference information. In other words, S220 is that the location management network element sends the first indication message to the terminal device based on the first reference information. For a specific process, refer to the foregoing descriptions. Details are not described herein again.

Based on S210 and S220, the location management network element may determine, based on an actual situation, a positioning manner most suitable for the terminal device, to improve terminal positioning efficiency, reduce signaling overheads, and reduce a positioning latency. In addition, the terminal device may be positioned based on a positioning manner indication delivered by the location management network element. In this way, the terminal device does not need to listen (listen) to, at any moment, an indication of starting the user plane positioning, so that power consumption of the terminal device can be reduced.

Optionally, in some embodiments, in S220a, if the positioning manner that is supported by the terminal device and that is indicated by the positioning capability of the terminal device includes the user plane positioning manner and the control plane positioning manner; in addition, the positioning types supported by the terminal device include a plurality of types or the positioning modes of the terminal device include a plurality of types, the location management network element may determine that different positioning manners (the user plane positioning manner or the control plane positioning manner) are used for different positioning types; and/or the location management network element may determine that different positioning manners (the user plane positioning manner or the control plane positioning manner) are used for different positioning modes. In this case, the location management network element indicates, by using the first indication message, to use the user plane positioning manner for positioning the terminal device, and may further indicate (for example, still by using the first indication message in S220a and S220b) the positioning type of the terminal device and/or the positioning mode of the terminal device that correspond/corresponds to the user plane positioning manner used by the terminal device, so that the user plane positioning can be subsequently performed on the terminal device by using the corresponding positioning type and/or positioning mode.

Further, optionally, in some embodiments, the location management network element may further indicate (for example, indicate, by using the first indication message in S220a and S220b or by using another message transmitted by the location management network element to the terminal device through the mobility management network element), to use the control plane positioning manner for positioning the terminal device, and the positioning type of the terminal device and/or the positioning mode of the terminal device that correspond/corresponds to the control plane positioning manner used by the terminal device, so that the terminal device can subsequently perform control plane positioning by using the corresponding positioning type and/or positioning mode.

Optionally, in some embodiments, the location management network element may further perform S230. An execution sequence of S230 and S220 is not limited in this embodiment of this application. In other words, S230 may be performed after S220, S230 may be performed before S220, or S230 and S220 may be performed simultaneously.

S230: The location management network element determines a target user plane positioning network element.

The target user plane positioning network element may be understood as a user plane positioning network element that subsequently participates in a procedure of performing user plane positioning on the terminal device.

In some embodiments, the location management network element may obtain the target user plane positioning network element from the NRF, so that the location management network element determines the target user plane positioning network element. For example, the location management network element may request the NRF to determine the target user plane positioning network element. After determining the target user plane positioning network element, the NRF sends an identifier of the determined target user plane positioning network element to the location management network element, so that the location management network element learns of the target user plane positioning network element.

In an example, if there is only one user plane positioning network element on the user plane, the NRF may use the only one user plane positioning network element on the user plane as the target user plane positioning network element.

In another example, if there are a plurality of user plane positioning network elements on the user plane, the NRF may determine one user plane positioning network element from the plurality of user plane positioning network elements as the target user plane positioning network element based on second reference information described below. For descriptions of the second reference information, refer to the following descriptions. Details are not described herein.

In still another example, if there are a plurality of (for example, L) user plane positioning network elements on the user plane, the NRF may determine L1 (where L1 is less than L) user plane positioning network elements in the L user plane positioning network elements based on the second reference information described below, and feed back the L1 user plane positioning network elements to the location management network element. In this case, the location management network element further needs to determine, in the L1 user plane positioning network elements, one user plane positioning network element as the target user plane positioning network element. For descriptions of the second reference information, refer to the following descriptions. Details are not described herein.

In this example, the second reference information on which the NRF is based may be existing in the NRF, or may be sent by the location management network element to the NRF. This is not limited in embodiments of this application.

In some other embodiments, the location management network element may determine the target user plane positioning network element.

In an example, if there is only one user plane positioning network element on the user plane, the location management network element may use the only one user plane positioning network element on the user plane as the target user plane positioning network element.

In another example, if there are a plurality of user plane positioning network elements on the user plane, S230 specifically includes: The location management network element determines one user plane positioning network element from the plurality of user plane positioning network elements as the target user plane positioning network element based on the second reference information.

For example, the second reference information may include at least one of the following: the pre-configured user plane positioning network element, the identity of the terminal device, the geographical location of the terminal device, the service load of the user plane positioning network element, the positioning quality of service requested for the positioning service, the type of the positioning request client, the type of the positioning service, performance of the user plane positioning network element, a positioning type supported by the terminal device, the positioning mode of the terminal device, and target dedicated network information, where the target dedicated network information indicates a network to which a user plane positioning session used by the terminal device belongs.

For example, the identity of the terminal device, the geographic location of the terminal device, the type of the positioning request client, and/or the QoS requested for the positioning service that are included in the second reference information may be carried in the first message, or may be separately sent by the mobility management network element to the location management network element. This is not limited in embodiments of this application.

The following describes how the location management network element determines the target user plane positioning network element from the plurality of user plane positioning network elements based on the second reference information by using an example in which the second reference information includes one of the items described above.

### (1) Pre-configured user plane positioning network element

For example, a first user plane positioning network element may be pre-configured as a user plane positioning network element for user plane positioning in a pre-configuration manner, such as through OAM, pre-configuration (pre-configuration), or local configuration. In this case, the first user plane positioning network element is the target user plane positioning network element.

### (2) Identity of the terminal device

For example, a correspondence between the identity of the terminal device and a user plane positioning network element may be pre-configured in a pre-configuration manner, such as through OAM, pre-configuration, or local configuration. Further, the location management network element may use a user plane positioning network element corresponding to the identity of the terminal device as the target user plane positioning network element.

For example, a PEI segment, an IMEI segment, an SUPI segment, an IMSI segment, a GPSI segment, an MSISDN segment, or an IP address range that can be served by each user plane positioning network element may be pre-configured. In this way, the location management network element may find, based on a PEI, an IMEI, an SUPI, an IMSI, a GPSI, an MSISDN, or an IP address of the terminal device, a user plane positioning network element that can serve the PEI, IMEI, SUPI, IMSI, GPSI, MSISDN, or IP address of the terminal device, namely, the target user plane positioning network element.

For other descriptions of the identity of the terminal device, refer to the foregoing descriptions. Details are not described herein again.

### (3) Geographical location of the terminal device

For example, a correspondence between a geographical location and a user plane positioning network element may be pre-configured in a pre-configuration manner, such as through OAM, pre-configuration, or local configuration. In this way, the location management network element may use a user plane positioning network element corresponding to the geographical location of the terminal device as the target user plane positioning network element.

For example, a geographical location that can be served by each user plane positioning network element may be pre-configured. In this way, the location management network element may find, based on the geographical location of the terminal device, the user plane positioning network element that can serve the terminal device, namely, the target user plane positioning network element.

### (6) Service load of the user plane positioning network element

For example, a user plane positioning network element with less load may be found from the plurality of user plane positioning network elements as the target user plane positioning network element.

### (7) Positioning quality of service requested for the positioning service

For example, a correspondence between positioning quality of service and a user plane positioning network element may be pre-configured in a pre-configuration manner, such as through OAM, pre-configuration, or local configuration. In this way, the location management network element may use a user plane positioning network element corresponding to the positioning quality of service requested for the current positioning service as the target user plane positioning network element.

### (8) Type of the positioning service

For example, a correspondence between a type of a positioning service and a user plane positioning network element may be pre-configured in a pre-configuration manner, such as through OAM, pre-configuration, or local configuration. In this way, the location management network element may use a user plane positioning network element corresponding to the type of the current positioning service as the target user plane positioning network element.

### (9) Performance of the user plane positioning network element

For example, a user plane positioning network element with good performance may be selected from the plurality of user plane positioning network elements as the target user plane positioning network element.

### (10) Positioning type supported by the terminal device

For example, a user plane positioning network element that supports all positioning types supported by the terminal device may be selected from the plurality of user plane positioning network elements as the target user plane positioning network element.

### (11) Positioning mode of the terminal device

For example, it may be pre-configured as follows: A user plane positioning network element with poor performance (for example, high load) may be selected from the plurality of user plane positioning network elements as the target user plane positioning network element based on a terminal device-based positioning mode or a standalone positioning mode; and a user plane positioning network element with good performance (for example, low load) may be selected from the plurality of user plane positioning network elements as the target user plane positioning network based on a terminal device-based positioning mode.

### (12) Target dedicated network information

For example, the target dedicated network information may indicate a target slice and a target data network name (data network name, DNN) (or an access point name (access point name, APN)), where the target slice and the DNN (or the APN) may be used to determine a user plane positioning session subsequently used in a process of user plane positioning on the terminal device. The target slice and the DNN (or the APN) may be understood as a network to which a user plane positioning session used by the terminal device belongs.

For example, a user plane positioning network element that supports content indicated by the target dedicated network information may be selected from the plurality of user plane positioning network elements as the target user plane positioning network element.

It should be noted that, when the second reference information includes at least two of the items described above, the location management network element may find, from the plurality of user plane positioning network elements based on the at least two of the items described above, a proper user plane positioning network element as the target user plane positioning network element. In an example, the location management network element may determine, based on the type of the positioning service, the positioning QoS, and performance of the user plane positioning network element, to select an appropriate user plane positioning network element from the plurality of user plane positioning network elements as the target user plane positioning network element.

In S230, the location management network element selects, based on the second reference information, a user plane positioning network element most suitable for the terminal device, so that flexibility and scalability are good. In addition, in a subsequent terminal device positioning process, an end-to-end positioning latency can be reduced.

After S230, the location management network element may further send, to the terminal device, information related to the target user plane positioning network element and/or information related to the terminal device in a subsequent positioning process.

For example, the information related to the target user plane positioning network element may include the identifier of the target user plane positioning network element and/or a digital certificate used by the target user plane positioning network element.

For example, the information related to the terminal device in the subsequent positioning process may include: the target dedicated network information, a type of an ID included by the terminal device in a user plane positioning SUPL session, an internet protocol (internet protocol, IP) address that is reported by the terminal device and that is used by the terminal device in the user plane positioning session, a port ID that is configured by the target user plane positioning network element for the terminal device and that is used for the user plane positioning on the terminal device, and/or a port ID that is reported by the terminal device and that is used for the user plane positioning on the terminal device.

For example, if the user plane positioning network element completes the user plane positioning on the terminal device by using an SUPL protocol, the IP address used by the terminal device in the user plane positioning session is an IP address used by the terminal device in an SUPL session.

A specific form of the type of the ID included by the terminal device in the user plane positioning SUPL session is not limited in embodiments of this application. For example, the type of the ID included by the terminal device in the user plane positioning SUPL session may include a PEI, an IMEI, an SUPI, an IMSI, a GPSI, an MSISDN, and an IP address.

It should be noted that the type of the ID included by the terminal device in the user plane positioning SUPL session may also be referred to as a set ID type in some embodiments.

A specific form of the port ID used for the user plane positioning on the terminal device is not limited in embodiments of this application.

Optionally, if a protocol specifies the port ID used for the user plane positioning on the terminal device, the information related to the terminal device in the subsequent positioning process may not include: the port ID that is configured by the target user plane positioning network element for the terminal device and that is used for the user plane positioning on the terminal device, and/or the port ID that is reported by the terminal device and that is used for the user plane positioning on the terminal device. For example, if the user plane positioning network element completes the user plane positioning on the terminal device by using the SUPL protocol, and the SUPL protocol specifies the port ID used for the user plane positioning on the terminal device, the information related to the terminal device in the subsequent positioning process may not include: the port ID that is configured by the target user plane positioning network element for the terminal device and that is used for the user plane positioning on the terminal device, and/or the port ID that is reported by the terminal device and that is used for the user plane positioning on the terminal device.

Optionally, if a protocol does not specify the port ID used by the terminal device in the user plane positioning session, the information related to the terminal device in the subsequent positioning process may include: the port ID that is configured by the target user plane positioning network element for the terminal device and that is used for the user plane positioning on the terminal device, and/or the port ID that is reported by the terminal device and that is used for the user plane positioning on the terminal device.

In an example, if S220 is performed after S230, the location management network element may include, in the first indication message, the information related to the target user plane positioning network element and/or the information related to the terminal device in the subsequent positioning process, and send the first indication message to the terminal device.

Certainly, regardless of an execution sequence between S220 and S230, the location management network element may send, to the terminal device by using a separate message, the information related to the target user plane positioning network element, and/or the information related to the terminal device in the subsequent positioning process. This is not limited in embodiments of this application.

Optionally, in some embodiments, after S230, the location management network element may further perform S240.

S240: The location management network element sends a second message to the target user plane positioning network element. Correspondingly, the target user plane positioning network element receives the second message sent by the location management network element.

The second message indicates to perform the user plane positioning on the terminal device.

For example, in some embodiments, the second message may further include at least one of the following: the identity of the terminal device, the positioning quality of service requested for the positioning service, the type of the positioning request client, the type of the positioning service, a location type of the terminal device, and a priority of a positioning procedure. In this way, when the target user plane positioning network element subsequently needs to use the content included in the second message, the target user plane positioning network element may obtain related information without re-requesting, to reduce a waste of resources.

For example, the location type of the terminal device may include a current location of the terminal device, a currently or recently known location of the terminal device, and/or an initial location of the terminal device.

For example, the priority of the positioning procedure may include: priorities of different positioning procedures of a same terminal device, priorities of positioning procedures of different terminal devices, preferentially performing a positioning procedure with a higher priority when there is a resource conflict, and/or regardless of priorities of positioning procedures when there is no resource conflict.

For example, the second message may also be referred to as a standard location immediate request (standard location immediate request, SLIR) message.

Optionally, in some embodiments, after S220, the terminal device may further perform S250.

S250: The terminal device sends an acknowledgment message to the location management network element. Correspondingly, the location management network element receives the acknowledgment message sent by the terminal device.

The acknowledgment message indicates the terminal device to determine that the terminal device is to be positioned in the user plane positioning manner.

Specifically, S250 may include: The terminal device first sends the acknowledgment message to the mobility management network element, that is, S250a shown in FIG. 3A, FIG. 3B, FIG. 4A, and FIG. 4B. Then, the mobility management network element forwards the acknowledgment message to the location management network element, that is, S250b shown in FIG. 3A, FIG. 3B, FIG. 4A, and FIG. 4B. In this case, the acknowledgment message in S250a may be, for example, transmitted by using an uplink NAS message (UL NAS TRANSPORT). The acknowledgment message in S250b may be, for example, an N1 notification message (Namf_Communication_N1InfoNotify).

Optionally, in some embodiments, after S220, the terminal device may further send, to the location management network element, the IP address (or an ID, where the IP address is used as an example for description below) used by the terminal device in the user plane positioning session and/or the port ID used for the user plane positioning on the terminal device. Correspondingly, the location management network element receives the IP address used by the terminal device in the user plane positioning session and/or the port ID used for the user plane positioning on the terminal device that are/is sent by the terminal device.

In an example, the terminal device may include, in the acknowledgment message in S250, the IP address used by the terminal device in the user plane positioning session and/or the port ID used for the user plane positioning on the terminal device, and transmit the acknowledgment message to the location management network element.

In another example, the terminal device may include, in a separate message, the IP address used by the terminal device in the user plane positioning session and/or the port ID used for the user plane positioning on the terminal device, and transmit the message to the location management network element. For a specific transmission process, refer to the foregoing process in which the terminal device transmits the first response message to the location management network element. Details are not described herein again.

Optionally, in some embodiments, after the location management network element receives the IP address used by the terminal device in the user plane positioning session and/or the port ID used for the user plane positioning on the terminal device, the location management network element may further forward the IP address used by the terminal device in the user plane positioning session and/or the port ID used for the user plane positioning on the terminal device to the target user plane positioning network element determined in S230.

In an example, the location management network element may include, in the second message in S240, the IP address used by the terminal device in the user plane positioning session and/or the port ID used for the user plane positioning on the terminal device, and transmit the second message to the target user plane positioning network element.

In another example, the location management network element may include, in a separate message, the IP address used by the terminal device in the user plane positioning session and/or the port ID used for the user plane positioning on the terminal device, and transmit the message to the target user plane positioning network element.

With reference to FIG. 3A, FIG. 3B, FIG. 4A, and FIG. 4B, the foregoing describes in detail the positioning manner determining method 200 shown in FIG. 2. With reference to FIG. 5A to FIG. 7B, the following describes in detail the positioning manner determining method 200 shown in FIG. 2.

For example, as shown in FIG. 5A to FIG. 7B, the positioning manner determining method 200 includes the following steps.

S210: The mobility management network element receives a first message.

In an example, the first message may be transmitted to a location management network element in the foregoing MT positioning procedure.

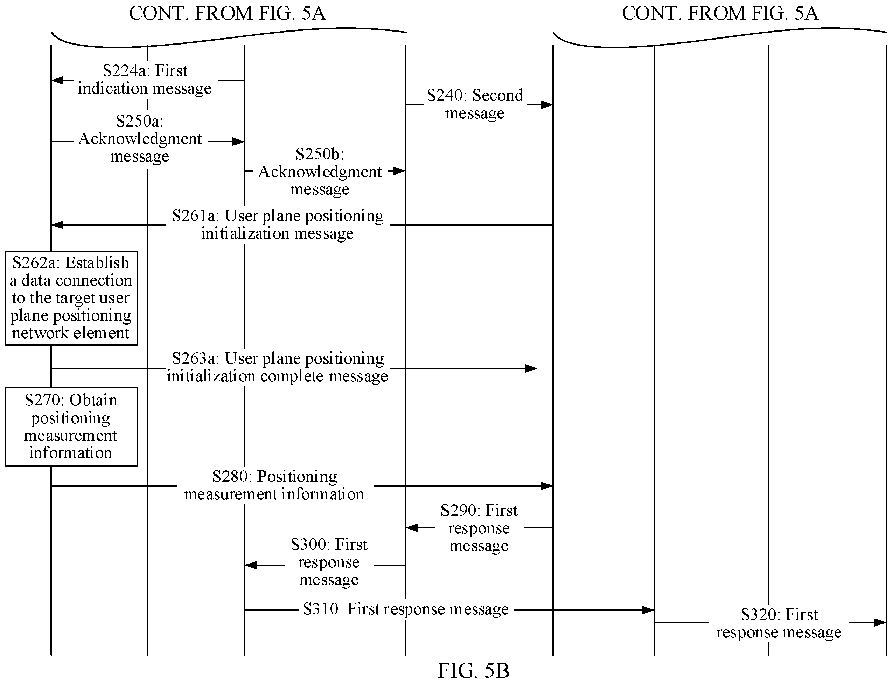

For example, an external client triggers S210. Specifically, as shown in FIG. 5 Ato FIG. 7B, before S210, the method 200 further includes S201a to S203a. For descriptions of S201a to S203a, refer to the foregoing related descriptions. Details are not described herein again.

In another example, the first message may be transmitted to the location management network element in the foregoing MO positioning procedure.

For example, the terminal device triggers S210. Specifically, before S210, the method 200 further includes the following steps.

S211: The terminal device sends the first message to the mobility management network element. Correspondingly, the mobility management network element receives the first message sent by the terminal device.

The first message is used to request to position the terminal device.

If the terminal device is in a connected state, the terminal device directly performs S211.

If the terminal device is in an idle state, the terminal device may trigger the terminal device to enter a connected state procedure. Specifically, the mobility management network element, the access network device, and the terminal device interact with each other, so that the terminal device enters the connected state (Service Request), that is, S202b. Then, the terminal device performs S211.

For descriptions of S202b, refer to the foregoing related descriptions. Details are not described herein again.

S220: The mobility management network element sends a first indication message to the terminal device based on a positioning capability of the terminal device. Correspondingly, the terminal device receives the first indication message sent by the mobility management network element.

In some embodiments, S220 includes S221a, S206a, S222a, S223a, and S224a shown in FIG. 5A and FIG. 5B. For descriptions of S206a, refer to the foregoing related descriptions. Details are not described herein again. The following describes in detail S221a, S222a, S223a, and S224a.

S221a: The mobility management network element determines, based on the positioning capability of the terminal device, to use a user plane positioning manner for positioning the terminal device.

The first indication message indicates to use the user plane positioning manner for positioning the terminal device.

For a solution in which the mobility management network element determines, based on the positioning capability of the terminal device, to use the user plane positioning manner for positioning the terminal device, refer to the foregoing solution in which the location management network element determines, based on the positioning capability of the terminal device, to use the user plane positioning manner for positioning the terminal device. Details are not described herein again.

Optionally, in some embodiments, S221a may include: The mobility management network element determines, based on the positioning capability of the terminal device and first reference information, to use the user plane positioning manner for positioning the terminal device.

For a solution in which the mobility management network element determines, based on the positioning capability of the terminal device and the first reference information, to use the user plane positioning manner for positioning the terminal device, refer to the foregoing solution in which the location management network element determines, based on the positioning capability of the terminal device and the first reference information, to use the user plane positioning manner for positioning the terminal device. Details are not described herein again.

S222a: The mobility management network element sends a second indication message to the location management network element. Correspondingly, the location management network element receives the second indication message sent by the mobility management network element.

The second indication message indicates to use the user plane positioning manner for positioning the terminal device.

S223a: The location management network element sends the first indication message to the mobility management network element. Correspondingly, the mobility management network element receives the first indication message sent by the location management network element.

S224a: The mobility management network element sends the first indication message to the terminal device. Correspondingly, the terminal device receives the first indication message sent by the mobility management network element.

Optionally, in some embodiments, in S221a, if a positioning manner that is supported by the terminal device and that is indicated by the positioning capability of the terminal device includes the user plane positioning manner and a control plane positioning manner; in addition, positioning types supported by the terminal device include a plurality of types or positioning modes of the terminal device include a plurality of types, the mobility management network element may determine that different positioning manners (the user plane positioning manner or the control plane positioning manner) are used for different positioning types; and/or the mobility management network element may determine that different positioning manners (the user plane positioning manner or the control plane positioning manner) are used for different positioning modes. In this case, the mobility management network element indicates, by using the first indication message, to use the user plane positioning manner for positioning the terminal device, and may further indicate (for example, still by using the first indication message in S224a) a positioning type of the terminal device and/or a positioning mode of the terminal device that correspond/corresponds to the user plane positioning manner used by the terminal device, so that user plane positioning can be subsequently performed on the terminal device by using the corresponding positioning type and/or positioning mode.

Further, optionally, in some embodiments, the mobility management network element may further indicate (for example, indicate, by using the first indication message in S224a or by using another message transmitted by the mobility management network element to the terminal device), to use the control plane positioning manner for positioning the terminal device, and a positioning type of the terminal device and/or a positioning mode of the terminal device that correspond/corresponds to the control plane positioning manner used by the terminal device, so that the terminal device can subsequently perform control plane positioning by using the corresponding positioning type and/or positioning mode.

Optionally, in some embodiments, as shown in FIG. 5A and FIG. 5B, the method 200 further includes S230, S240, S250a, and 250b.

An execution sequence of S230 and S223a is not limited in embodiments of this application. For example, S230 may be performed before S223a, or S230 may be performed after S223a, or S230 and S223a may be performed simultaneously.

Optionally, when S230 is performed before S223a, the first indication message in S223a and S224a further indicates at least one of the following: a digital certificate used by a target user plane positioning network element, target dedicated network information, a type of an ID included by the terminal device in a user plane positioning session, an IP address that is reported by the terminal device and that is used by the terminal device in the user plane positioning session, a port ID that is configured by the target user plane positioning network element for the terminal device and that is used for the user plane positioning on the terminal device, and a port ID that is reported by the terminal device and that is used for the user plane positioning on the terminal device.

Optionally, when S230 is performed before S223a, the method 200 may further include: The location management network element sends an identifier of the target user plane positioning network element to the mobility management network element. Further, the mobility management network element sends the identifier of the target user plane positioning network element to the terminal device. In this example, optionally, the identifier of the target user plane positioning network element may be carried in the first indication message in S223a and S224a. Certainly, the identifier of the target user plane positioning network element may alternatively be transmitted by the location management network element to the terminal device by using a separate message. This is not limited in embodiments of this application.

A specific form of the identifier of the target user plane positioning network element is not limited in embodiments of this application. For example, the identifier of the target user plane positioning network element may be an IP address of the target user plane positioning network element, or may be a fully qualified domain name (fully qualified domain name, FQDN) of the target user plane positioning network element.

For descriptions of S230, S240, S250a, and S250b, refer to the foregoing related descriptions. Details are not described herein again.

Optionally, in some embodiments, after S220, the terminal device may further send, to the location management network element, the IP address used by the terminal device in the user plane positioning session and/or the port ID used for the user plane positioning on the terminal device. Correspondingly, the location management network element receives the IP address used by the terminal device in the user plane positioning session and/or the port ID used for the user plane positioning on the terminal device that are/is sent by the terminal device.

In an example, the terminal device may include, in the acknowledgment message in S250, the IP address used by the terminal device in the user plane positioning session and/or the port ID used for the user plane positioning on the terminal device, and transmit the acknowledgment message to the location management network element.

In another example, the terminal device may include, in a separate message, the IP address used by the terminal device in the user plane positioning session and/or the port ID used for the user plane positioning on the terminal device, and transmit the message to the location management network element. For a specific transmission process, refer to the foregoing process in which the terminal device transmits the first response message to the location management network element. Details are not described herein again.

Optionally, in some embodiments, after the location management network element receives the IP address used by the terminal device in the user plane positioning session and/or the port ID used for the user plane positioning on the terminal device, the location management network element may further forward the IP address used by the terminal device in the user plane positioning session and/or the port ID used for the user plane positioning on the terminal device to the target user plane positioning network element determined in S230.

In an example, the location management network element may include, in the second message in S240, the IP address used by the terminal device in the user plane positioning session and/or the port ID used for the user plane positioning on the terminal device, and transmit the second message to the target user plane positioning network element.

In another example, the location management network element may include, in a separate message, the IP address used by the terminal device in the user plane positioning session and/or the port ID used for the user plane positioning on the terminal device, and transmit the message to the target user plane positioning network element.

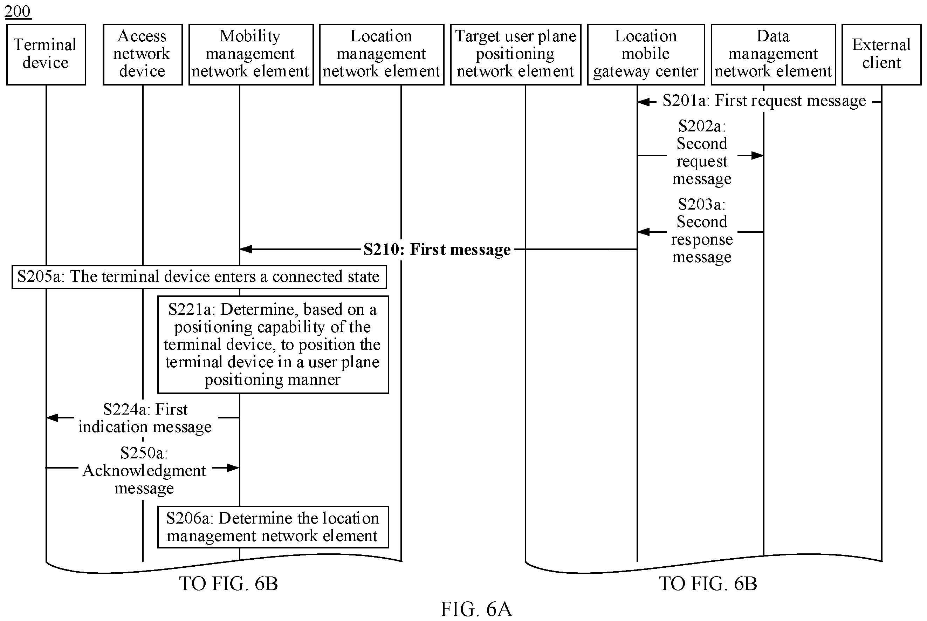

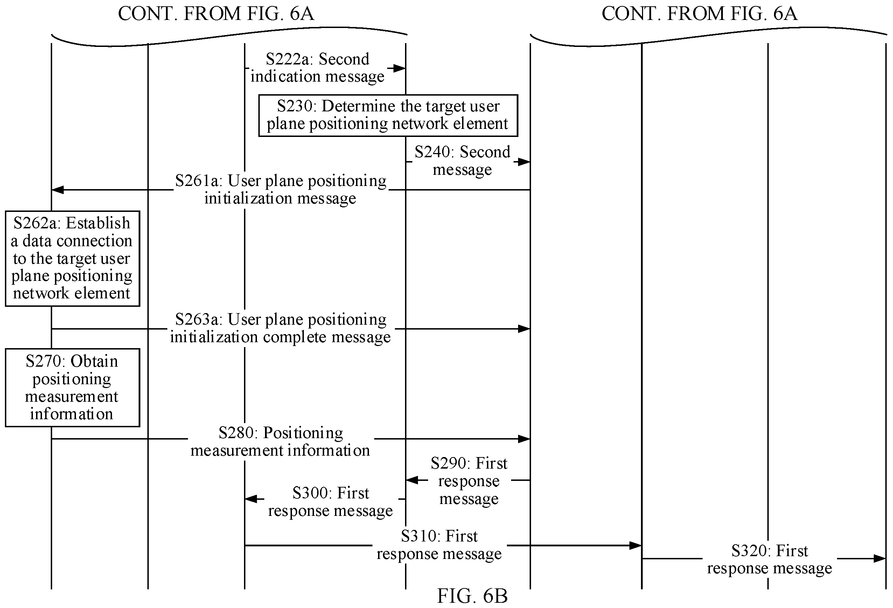

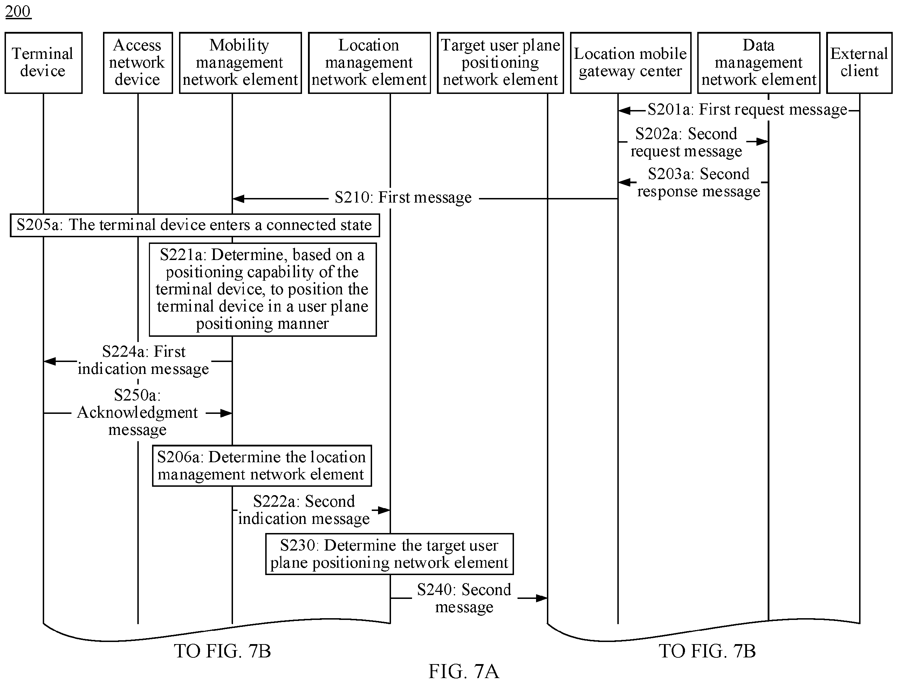

In some other embodiments, S220 includes S221a, S224a, and S250a shown in FIG. 6A, FIG. 6B, FIG. 7A, and FIG. 7B. For descriptions of S221a, S224a, and S250a, refer to the foregoing related descriptions. Details are not described herein again.

Optionally, in some embodiments, as shown in FIG. 6A, FIG. 6B, FIG. 7A, and FIG. 7B, the method 200 further includes S206a, S222a, S230, and S240.

For descriptions of S206a, S222a, S230, and S240, refer to the foregoing related descriptions. Details are not described herein again.

Optionally, in some embodiments, after S220, the terminal device may further send, to the location management network element, the IP address used by the terminal device in the user plane positioning session and/or the port ID used for the user plane positioning on the terminal device. Correspondingly, the location management network element receives the IP address used by the terminal device in the user plane positioning session and/or the port ID used for the user plane positioning on the terminal device that are/is sent by the terminal device.

In an example, the terminal device may include, in the acknowledgment message in S250a and the second indication message in S222a, the IP address used by the terminal device in the user plane positioning session and/or the port ID used for the user plane positioning on the terminal device, and transmit the acknowledgment message and the second indication message to the location management network element.

In another example, the terminal device may include, in a separate message, the IP address used by the terminal device in the user plane positioning session and/or the port ID used for the user plane positioning on the terminal device, and transmit the message to the location management network element. For a specific transmission process, refer to the foregoing process in which the terminal device transmits the first response message to the location management network element. Details are not described herein again.

Optionally, in some embodiments, after the location management network element receives the IP address used by the terminal device in the user plane positioning session and/or the port ID used for the user plane positioning on the terminal device, the location management network element may further forward the IP address used by the terminal device in the user plane positioning session and/or the port ID used for the user plane positioning on the terminal device to the target user plane positioning network element determined in S230.

In an example, the location management network element may include, in the second message in S240, the IP address used by the terminal device in the user plane positioning session and/or the port ID used for the user plane positioning on the terminal device, and transmit the second message to the target user plane positioning network element.

In another example, the location management network element may include, in a separate message, the IP address used by the terminal device in the user plane positioning session and/or the port ID used for the user plane positioning on the terminal device, and transmit the message to the target user plane positioning network element.

Optionally, in some embodiments, after S220, the terminal device may establish a data connection between the terminal device and the target user plane positioning network element, that is, S260.

In an example, if the terminal device side does not have the identifier of the target user plane positioning network element, and the target user plane positioning network element side has the IP address used by the terminal device in the user plane positioning session and/or the port ID used for the user plane positioning on the terminal device, the terminal device may passively establish the data connection to the target user plane positioning network element.

Specifically, S260 includes S261a and S262a shown in FIG. 3A and FIG. 3B, FIG. 5A and FIG. 5B, and FIG. 6A and FIG. 6B. The following describes S261a and S262a in detail.

S261a: The target user plane positioning network element sends a user plane positioning initialization message to the terminal device based on the IP address used by the terminal device in the user plane positioning session and/or the port ID used for the user plane positioning on the terminal device. Correspondingly, the terminal device receives the user plane positioning initialization message sent by the target user plane positioning network element.

The user plane positioning initialization message is used to enable the user plane positioning session.

For example, if a user plane positioning network element completes the user plane positioning on the terminal device by using an SUPL protocol, the user plane positioning initialization message may also be referred to as a secure user plane positioning initialization (SUPL init) message.

In this case, the terminal device needs to enable an SUPL detection function, to be specific, the terminal device continuously detects a user plane positioning initialization message sent from a specific port. If the terminal device does not enable the SUPL detection function, the terminal device directly discards a message sent from a specified port.

S262a: The terminal device establishes the data connection to the target user plane positioning network element.

In some embodiments, if an existing data session on the terminal device side cannot access the target user plane positioning network element, the terminal device further needs to establish a session that can access the target user plane positioning network element.

In some other embodiments, if an existing data session on the terminal device side can access the target user plane positioning network element, the terminal device may not need to establish a session that can access the target user plane positioning network element.

After S262a, the terminal device may further perform S263a.

S263a: The terminal device sends a user plane positioning initialization complete message to the target user plane positioning network element. Correspondingly, the target user plane positioning network element receives the user plane positioning initialization complete message sent by the terminal device.

The user plane positioning initialization complete message indicates to start a positioning procedure for the terminal device.

For example, if the user plane positioning network element completes the user plane positioning on the terminal device by using the SUPL protocol, the user plane positioning initialization complete message may also be referred to as a secure user plane positioning initialization complete (SUPL POS init) message.

In another example, if the terminal device side has no identifier of the target user plane positioning network element on and the network side has only one user plane positioning network element, the terminal device may actively establish a data connection to the only one user plane positioning network element on the network side, namely, the target user plane positioning network element.

Specifically, S260 includes S261c and S262b. For descriptions of S262b, refer to the following related descriptions. Details are not described herein again. The following describes S261c in detail.

S261c: The terminal device establishes the data connection to the target user plane positioning network element based on the identifier or the FQDN of the user plane positioning network element.

Specifically, the terminal device generates the corresponding fully qualified domain name (fully qualified domain name, FQDN) based on the identifier that is of the user plane positioning network element and that is locally stored in the terminal device or based on a SIM card. Then, the terminal device obtains an address of the target user plane positioning network element by using the identifier or the FQDN of the user plane positioning network element, and establishes the data connection to the target user plane positioning network element.

In still another example, when the terminal device side has the identifier of the target user plane positioning network element, the terminal device may actively establish the data connection to the target user plane positioning network element.

Specifically, S260 includes S261b and S262b shown in FIG. 4A, FIG. 4B, FIG. 7A, and FIG. 7B. The following describes S261b and S262b in detail.

S261b: The terminal device establishes the data connection to the target user plane positioning network element based on the identifier of the target user plane positioning network element.

In some embodiments, if an existing data session on the terminal device side cannot access the target user plane positioning network element, the terminal device further needs to establish a session that can access the target user plane positioning network element.

In some other embodiments, if an existing data session on the terminal device side can access the target user plane positioning network element, the terminal device may not need to establish a session that can access the target user plane positioning network element.

S262b: The terminal device sends a user plane positioning start message to the target user plane positioning network element. Correspondingly, the target user plane positioning network element receives the user plane positioning start message sent by the terminal device.

The user plane positioning start message indicates that the user plane positioning session is enabled.

For example, if the user plane positioning network element completes the user plane positioning on the terminal device by using the SUPL protocol, the user plane positioning start message may also be referred to as a secure user plane positioning start (SUPL start) message.

It should be noted that, when the terminal device or the network side does not initiate a positioning procedure for the first time, if a location area of the terminal device remains unchanged, a type of a positioning service remains unchanged, positioning QoS remains unchanged, and the location management network element remains unchanged; or the network side (the location management network element or the mobility management network element) does not change a positioning manner for the terminal device, for the MO positioning procedure, if the terminal device already has a user plane management network element identifier, the terminal device may directly communicate with the user plane by using the user plane management network element identifier, and does not need to perform a control plane indication procedure; and for the MT procedure, if there is a session connection between the user plane management network element and the terminal device, the network side may directly initiate the user plane positioning.

Optionally, in some embodiments, after S260, the terminal device and the target user plane positioning network element may start to position the terminal device. For example, as shown in FIG. 3A to FIG. 7B, the method 200 further includes the following steps.

S270: The terminal device obtains positioning measurement information.

In some embodiments, the positioning measurement information is information related to positioning on the terminal device.

In an example, the positioning measurement information includes only information that is measured by the terminal device and that is related to positioning on the terminal device.

In another example, the positioning measurement information includes information that is measured by the terminal device and that is related to positioning on the terminal device, and further includes information that is measured by the access network device and that is related to positioning on the terminal device.

In this example, the terminal device further needs to perform S271 to S276, to obtain the information that is measured by the access network device and that is related to positioning on the terminal device. The following describes S271 to S276 in detail.

S271: The terminal device sends a third request message to the target user plane positioning network element. Correspondingly, the target user plane positioning network element receives the third request message sent by the terminal device.

The third request message is used to request the information that is measured by the access network device and that is related to positioning on the terminal device.

S272: The target user plane positioning network element sends the third request message to the location management network element. Correspondingly, the location management network element receives the third request message sent by the target user plane positioning network element.

S273: The location management network element sends the third request message to the access network device. Correspondingly, the access network device receives the third request message sent by the location management network element.

S274: The access network device sends a third response message to the location management network element. Correspondingly, the location management network element receives the third response message sent by the access network device.

The third response message indicates the information that is measured by the access network device and that is related to positioning on the terminal device.

S275: The location management network element sends the third response message to the target user plane positioning network element. Correspondingly, the target user plane positioning network element receives the third response message sent by the location management network element.

The target user plane positioning network element may obtain, from a control plane by using S272 to S275, the information that is measured by the access network device and that is related to positioning on the terminal device.

S276: The target user plane positioning network element sends the third response message to the terminal device. Correspondingly, the terminal device receives the third response message sent by the target user plane positioning network element.

In some other embodiments, the positioning measurement information indicates a location of the terminal device.

In this example, the terminal device further needs to perform S271 and S276 described above, to obtain the information that is measured by the access network device and that is related to positioning on the terminal device; and determine the location of the terminal device based on the information that is measured by the terminal device and that is related to positioning on the terminal device and the information that is measured by the access network device and that is related to positioning on the terminal device.

In an embodiment in which the first message is transmitted to the location management network element in the foregoing MO positioning procedure, the terminal device initiates positioning on the terminal device. In this case, after obtaining the location of the terminal device, the terminal device may end a user plane positioning procedure.

In an embodiment in which the first message is transmitted to the location management network element in the foregoing MT positioning procedure, the external client initiates positioning on the terminal device. In this case, the terminal device further needs to perform S280 to S320.

S280: The terminal device sends the positioning measurement information to the target user plane positioning network element. Correspondingly, the target user plane positioning network element receives the positioning measurement information sent by the terminal device.

In some embodiments, if the positioning measurement information is the information related to positioning on the terminal device, the user plane positioning network element may further determine the location of the terminal device based on the positioning measurement information, and include the location of the terminal device in the positioning measurement information in S280.

S290: The target user plane positioning network element sends a first response message to the location management network element. Correspondingly, the location management network element receives the first response message sent by the target user plane positioning network element.

In some embodiments, if the positioning measurement information in S280 indicates the information related to positioning on the terminal device, the target user plane positioning network element may further determine the location of the terminal device based on the information related to positioning on the terminal device, and include the location of the terminal device in the first response message in S290.

In an example, if the target user plane positioning network element has the location of the terminal device, the first response message may carry the location of the terminal device. In another example, if the target user plane positioning network element has only the information related to positioning on the terminal device, and the target user plane positioning network element does not determine the location of the terminal device based on the information related to positioning on the terminal device, the first response message may carry the information related to positioning on the terminal device.

In some embodiments, in S270, it is assumed that the terminal device obtains N groups of positioning measurement information by using N positioning types of the terminal device, where N is a positive integer.

In this case, in an example, the terminal device may transmit all the N groups of positioning measurement information to the target user plane positioning network element through the user plane. In other words, in S280, the terminal device may send all the N groups of positioning measurement information to the target user plane positioning network element. All the N groups of obtained positioning measurement information are transmitted to the target user plane positioning network element through the user plane; for the network side, load of the control plane is reduced, a case of service congestion on the control plane can be avoided, and a probability of occurrence of control plane flow control can be reduced; in addition, the N groups of positioning measurement information are not frequently transmitted through the control plane, so that overheads of the control plane are reduced; moreover, the user plane is mainly used for data transmission, and the control plane is mainly used for signaling transmission instead of frequently transmitting small data packets. This is more suitable for use of the user plane and the control plane. For the terminal device, network user plane deployment is flexible and a user plane protocol is designed to adapt to small and high-frequency packets. Therefore, for the terminal device, an end-to-end positioning latency can be reduced, and positioning efficiency can be improved.

In another example, the terminal device may transmit N1 groups of positioning measurement information in the N groups of positioning measurement information to the target user plane positioning network element through the user plane, and transmit N2 groups of positioning measurement information in the N groups of positioning measurement information to the location management network element through the control plane. To be specific, in S280, the terminal device may send the N1 groups of positioning measurement information in the N groups of positioning measurement information to the target user plane positioning network element. In addition, after S280, S281 needs to be further performed, to be specific, the N2 groups of positioning measurement information in the N groups of positioning measurement information are transmitted to the location management network element through the mobility management network element. In this case, the location that is of the terminal device and that is carried in the first response message in S290 is determined based on only the N1 groups of positioning measurement information in the N groups of positioning measurement information, or the information that is related to positioning on the terminal device and that is carried in the first response message in S290 includes only the N1 groups of positioning measurement information in the N groups of positioning measurement information.

In still another example, the terminal device may transmit N3 groups of positioning measurement information in the N groups of positioning measurement information to the target user plane positioning network element through the user plane, and transmit N4 groups of positioning measurement information in the N groups of positioning measurement information to the target user plane positioning network element through the control plane. To be specific, in S280, the terminal device may send the N3 groups of positioning measurement information in the N groups of positioning measurement information to the target user plane positioning network element. In addition, after S280, S282 needs to be further performed, to be specific, the N4 groups of positioning measurement information in the N groups of positioning measurement information are transmitted to the target user plane positioning network element through the mobility management network element and the location management network element. In this case, the location that is of the terminal device and that is carried in the first response message in S290 is determined based on the N groups of positioning measurement information, or the information that is related to positioning on the terminal device and that is carried in the first response message in S290 includes only the N groups of positioning measurement information.

A quantity of pieces of positioning measurement information included in each group of the N groups of positioning measurement information is not limited in embodiments of this application.

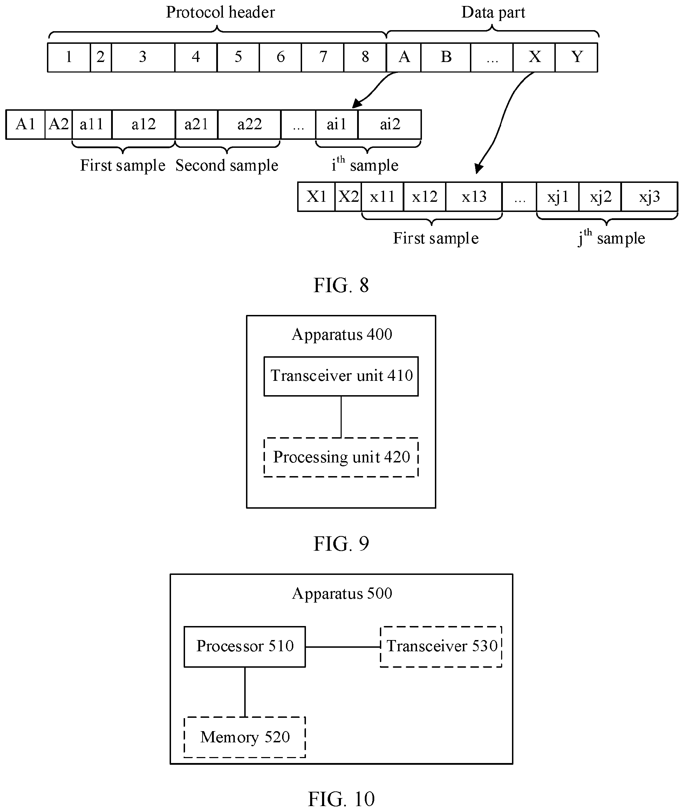

Based on the foregoing embodiment, in an example, a plurality of groups of positioning measurement information may be transmitted between devices or network elements in a form of a packet shown in FIG. 8.

It should be noted that the packet shown in FIG. 8 is merely an example of the plurality of groups of positioning measurement information, and should not constitute a limitation on this application.

For example, as shown in FIG. 8, the packet includes a protocol header (fields numbered 1 to 8 in FIG. 8) and a data part (fields numbered A to Y in FIG. 8).

The protocol header indicates information about the packet. For example, as shown in FIG. 8, the protocol header includes:
(1) Message type (MsgType) field (the field numbered 1 in FIG. 8): may generally occupy five bytes, and indicates a source of the packet, where the source may be understood as that data indicated by the packet is data obtained based on a specific positioning type in the positioning type of the terminal device;
(2) Transmission protocol (TransVersion) field (the field numbered 2 in FIG. 8): may generally occupy one byte, indicates a transmission protocol and a version, and may be negotiated by the location management network element and the terminal device;
(3) Identifier field (the field numbered 3 in FIG. 8) of the terminal device: may generally occupy eight bytes, and may be negotiated by the location management network element and the terminal device;
(4) Timestamp (Timestamp) field (the field numbered 4 in FIG. 8): may generally occupy eight bytes, indicates a timestamp at which the packet is reported, and may be in a unit of millisecond; and
(5) Data source combination indication bit (SrcType) field (the field numbered 5 in FIG. 8): may generally occupy five bytes, and indicates a quantity of source types included in the packet.

Optionally, in some embodiments, as shown in FIG. 8, the protocol header may further include:
(6) Length field (the field numbered 6 in FIG. 8) of the data part: may generally occupy four bytes;
(7) Parity bit field (the field numbered 7 in FIG. 8): may generally occupy two bytes; and
(8) Padding bit field (the field numbered 8 in FIG. 8): may generally occupy 24 bytes.

The data part indicates data from various sources. For example, as shown in FIG. 8, the data part includes data from 25 (numbered A to Y in FIG. 8) sources.

The data may be fixed-length data or may be variable-length data. For example, as shown in FIG. 8, data in the field numbered A may be fixed-length data, and data in the field numbered X may be variable-length data.

The fixed-length data includes:
(1) Data source type identifier (SrcTag) field (a field numbered A1 in FIG. 8): may generally occupy one byte, and indicates a type of a data source;
(2) Data source sample identifier (SrcSampleTag) field (a field numbered A2 in FIG. 8): generally occupies one byte, where if only data collected for one time is reported once, a default value 1 is used for the field; and if samples (data) collected for a plurality of times are reported once, a quantity of collected samples (pieces of data) needs to be identified; and
(3) i (i is a positive integer greater than or equal to 1) sample fields, where each sample field includes a data source timestamp (SrcTimestamp) field and a payload (data) part field, and the data source timestamp (SrcTimestamp) field may generally occupy eight bytes, indicates a timestamp for collecting the sample (data), and may be in a unit of millisecond.

For example, as shown in FIG. 8, a field numbered a11 is a data source timestamp field of the first sample, and a field numbered a12 is a payload part of the first sample. Afield numbered a21 is a data source timestamp field of the second sample, and a field numbered a22 is a payload part of the second sample. Afield numbered ai1 is a data source timestamp field of an i^{th} sample, and a field numbered ai2 is a payload part of the i^{th} sample.

The variable-length data includes:
(1) Data source type identifier (SrcTag) field (a field numbered X1 in FIG. 8);
(2) Data source sample identifier (SrcSampleTag) field (a field numbered X2 in FIG. 8); and
(3) j (j is a positive integer greater than or equal to 1) sample fields, where each sample field includes a data source timestamp (SrcTimestamp) field, a payload length field, and a payload (data) part field, where a quantity of bytes occupied by the payload length field is variable.

For example, as shown in FIG. 8, a field numbered x11 is a data source timestamp field of the first sample, a field numbered x12 is a payload length of the first sample, and a field numbered x13 is a payload part of the first sample. Afield numbered xj 1 is a data source timestamp field of a j^{th} sample, a field numbered xj2 is a payload length of the j^{th} sample, and a field numbered xj3 is a payload part of the j^{th} sample.

For a part that is not described in each field included in the variable-length data, refer to the corresponding descriptions in the fixed-length data. Details are not described herein again.

Optionally, in some embodiments, regardless of whether the data is the fixed-length data or the variable-length data, a data source collection frequency (SrcFrequency) field may be further included. The data source collection frequency field may generally occupy one byte, and indicates a data source collection frequency.

S300: The location management network element sends a first response (for example, Nlmf_Location_DetermineLocation Response) message to the mobility management network element. Correspondingly, the mobility management network element receives the first response message sent by the location management network element.

In some embodiments, if the first response message in S290 indicates the information related to positioning on the terminal device, the location management network element may further determine the location of the terminal device based on the information related to positioning on the terminal device, and include the location of the terminal device in the first response message in S300.

In an example, if the location management network element has the location of the terminal device, the first response message may carry the location of the terminal device. In another example, if the location management network element has only the information related to positioning on the terminal device, and the location management network element does not determine the location of the terminal device based on the information related to positioning on the terminal device, the first response message may carry the information related to positioning on the terminal device.

S310: The mobility management network element sends a first response (for example, Namf_Location_ProvidePositioningInfo_Response) message to the location gateway mobility center. Correspondingly, the location gateway mobile center receives the first response message sent by the mobility management network element.

In some embodiments, if the first response message in S300 indicates the information related to positioning on the terminal device, the mobility management network element may further determine the location of the terminal device based on the information related to positioning on the terminal device, and include the location of the terminal device in the first response message in S310.

S320: The location gateway mobile center sends a first response (for example, LCS Service Response) message to the external client. Correspondingly, the external client receives the first response message sent by the location gateway mobile center.

In this embodiment of this application, a solution of how a network element (the terminal device, the location management network element, the target user plane positioning network element, or the mobility management network element) determines the location of the terminal device based on the N groups of positioning measurement information is not limited. For example, the N groups of positioning measurement information may be input into a fusion position and posture localization model, and the fusion position and posture localization model may output the location of the terminal device based on a fusion position and posture localization algorithm. In this way, precision of the location of the terminal device determined with reference to a plurality of groups of positioning measurement information is high.

The foregoing describes in detail, based on FIG. 2 to FIG. 7B, the positioning manner determining method provided in embodiments of this application. Based on FIG. 9 and FIG. 10, the following describes in detail the positioning manner determining apparatuses in FIG. 2 to FIG. 7B that are related to execution of the positioning manner determining method.

FIG. 9 is a schematic block diagram of a positioning manner determining apparatus 400 according to an embodiment of this application. The apparatus 400 includes a transceiver unit 410. Optionally, the apparatus 400 may further include a processing unit 420. The transceiver unit 410 may communicate with the outside, and the processing unit 420 is configured to perform data processing. The transceiver unit 410 may also be referred to as a communication interface or a communication unit.

Optionally, the apparatus 400 may further include a storage unit. The storage unit may be configured to store instructions and/or data. The processing unit 420 may read the instructions and/or the data in the storage unit.

The apparatus 400 may be configured to perform an action performed by a core network element (for example, the location management network element or the mobility management network element) in the foregoing method embodiment. In this case, the apparatus 400 may be a core network element or a component that may be configured in the core network element. The transceiver unit 410 is configured to perform receiving and sending related operations on the core network element side in the foregoing method embodiment. The processing unit 420 is configured to perform a processing related operation on the core network element side in the foregoing method embodiment.

Alternatively, the apparatus 400 may be configured to perform an action performed by the terminal device in the method embodiment. In this case, the apparatus 400 may be a terminal device or a component that may be configured in the terminal device. The transceiver unit 410 is configured to perform receiving and sending related operations on the terminal device side in the method embodiment. The processing unit 420 is configured to perform a processing related operation on the terminal device side in the method embodiment.

As shown in FIG. 10, an embodiment of this application further provides a positioning manner determining apparatus 500. The positioning manner determining apparatus 500 includes a processor 510. The processor 510 is coupled to a memory 520. The memory 520 is configured to store a computer program or instructions and/or data. The processor 510 is configured to execute the computer program or the instructions and/or the data stored in the memory 520, so that the method in the foregoing method embodiment is performed.

Optionally, the positioning manner determining apparatus 500 includes one or more processors 510.

Optionally, as shown in FIG. 10, the positioning manner determining apparatus 500 may further include a memory 520.

Optionally, the positioning manner determining apparatus 500 may include one or more memories 520.

Optionally, the memory 520 and the processor 510 may be integrated together or separately disposed.

Optionally, as shown in FIG. 10, the wireless positioning manner determining apparatus 500 may further include a transceiver 530. The transceiver 530 is configured to receive and/or send a signal. For example, the processor 510 is configured to control the transceiver 530 to receive and/or send a signal.

In a solution, the positioning manner determining apparatus 500 is configured to implement an operation performed by the access network device in the foregoing method embodiment.

For example, the processor 510 is configured to implement a processing related operation performed by the access network device in the foregoing method embodiment, and the transceiver 530 is configured to implement receiving and sending related operations performed by the access network device in the foregoing method embodiment.

In another solution, the positioning manner determining apparatus 500 is configured to implement an operation performed by the location management function device in the foregoing method embodiment.

For example, the processor 510 is configured to implement a processing related operation performed by the location management function device in the foregoing method embodiment, and the transceiver 530 is configured to implement receiving and sending related operations performed by the location management function device in the foregoing method embodiment.

An embodiment of this application further provides a computer-readable storage medium. The computer-readable storage medium stores computer instructions used for implementing the method performed by the core network element or the method performed by the terminal device in the foregoing method embodiments.

For example, when a computer program is executed by a computer, the computer is enabled to implement the method performed by the core network element or the method performed by the terminal device in the foregoing method embodiments.

An embodiment of this application further provides a computer program product including instructions. When the instructions are executed by a computer, the computer is enabled to implement the method performed by the core network element or the method performed by the terminal device in the foregoing method embodiments.

An embodiment of this application further provides a communication system. The communication system includes a core network element and a terminal device.

In an example, the communication system includes the core network element and the terminal device in the foregoing embodiments.

For explanations and beneficial effects of related content of any of the positioning manner determining apparatuses provided above, refer to the corresponding method embodiment provided above. Details are not described herein again.

A specific structure of an execution body of the method provided in embodiments of this application is not particularly limited in embodiments of this application, provided that communication can be performed according to the method provided in embodiments of this application by running a program that records code of the method provided in embodiments of this application. For example, the method provided in embodiments of this application may be performed by an access network device or a location management function device, or may be a functional module that is in the access network device or the location management function device and that can invoke and execute a program.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementations. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A positioning manner determining method, wherein the method comprises:
receiving, by a core network element, a first message, wherein the first message is used to request to position a terminal device; and
sending, by the core network element, a first indication message to the terminal device based on a positioning capability of the terminal device, wherein the first indication message indicates to use a user plane positioning manner for positioning the terminal device, and the positioning capability of the terminal device indicates a positioning manner supported by the terminal device.

2. The method according to claim 1, wherein the sending, by the core network element, a first indication message to the terminal device based on a positioning capability of the terminal device comprises:
sending, by the core network element, the first indication message to the terminal device based on the positioning capability of the terminal device and first reference information, wherein
the first reference information comprises at least one of the following: a pre-configured positioning manner, priorities of control plane positioning and user plane positioning, an identity of the terminal device, a data session status of the terminal device, a geographical location of the terminal device, service load of a user plane positioning network element, load of a mobility management network element, positioning quality of service requested for a positioning service, a type of a positioning request client, a type of the positioning service, a positioning type supported by the terminal device, and a positioning mode of the terminal device, wherein the data session status of the terminal device indicates data session context information on the terminal device.

3. The method according to claim 1 or 2, wherein the sending, by the core network element, the first indication message to the terminal device based on first reference information comprises:
determining, by the core network element based on the first reference information, to use the user plane positioning manner for positioning the terminal device; and
sending, by the core network element, the first indication message to the terminal device.

4. The method according to any one of claims 1 to 3, wherein the core network element is a location management network element, and the method further comprises:
determining, by the location management network element, a target user plane positioning network element, wherein the target user plane positioning network element is a user plane positioning network element that performs user plane positioning communication with the terminal device.

5. The method according to claim 4, wherein the determining, by the location management network element, a target user plane positioning network element comprises:
determining, by the location management network element, the target user plane positioning network element from a plurality of user plane positioning network elements based on second reference information, wherein
the second reference information comprises at least one of the following: a pre-configured user plane positioning network element, the identity of the terminal device, the geographical location of the terminal device, the service load of the user plane positioning network element, the positioning quality of service requested for the positioning service, the type of the positioning request client, the type of the positioning service, performance of the user plane positioning network element, the positioning type supported by the terminal device, the positioning mode of the terminal device, and target dedicated network information, wherein the target dedicated network information indicates a network to which a user plane positioning session used by the terminal device belongs.

6. The method according to claim 4 or 5, wherein the first indication message further indicates at least one of the following: an identifier of the target user plane positioning network element, a digital certificate used by the target user plane positioning network element, the target dedicated network information, a type of an identity ID comprised by the terminal device in the user plane positioning session, an internet protocol IP address that is reported by the terminal device and that is used by the terminal device in the user plane positioning session, a port ID that is configured by the target user plane positioning network element for the terminal device and that is used for the user plane positioning on the terminal device, and a port ID that is reported by the terminal device and that is used for the user plane positioning on the terminal device.

7. The method according to any one of claims 4 to 6, wherein the method further comprises:
sending, by the location management network element, a second message to the target user plane positioning network element, wherein the second message indicates to perform the user plane positioning on the terminal device.

8. The method according to any one of claims 4 to 7, wherein the receiving, by a core network element, a first message comprises:
receiving, by the location management network element, the first message sent by the mobility management network element, wherein
the first message comprises at least one of the following: the positioning mode of the terminal device, the positioning type supported by the terminal device, a user plane positioning capability of the terminal device, the priorities of the control plane positioning and the user plane positioning, and the data session status of the terminal device, wherein the user plane positioning capability of the terminal device indicates that the terminal device supports the user plane positioning.

9. The method according to claim 8, wherein the user plane positioning capability of the terminal device is determined based on at least one of the following: a positioning manner configured for the mobility management network element, the positioning capability of the terminal device, and a positioning manner that the terminal device subscribes to and is authorized.

10. The method according to any one of claims 4 to 7, wherein the receiving, by a core network element, a first message comprises:
receiving, by the location management network element, the first message sent by the mobility management network element, wherein
the first message comprises the priorities of the control plane positioning and the user plane positioning, and/or the data session status of the terminal device; and
the method further comprises:
sending, by the location management network element, a request message to the terminal device, wherein the request message is used to request the terminal device to report a capability of the terminal device; and
receiving, by the location management network element, a response message sent by the terminal device, wherein the response message indicates a user plane positioning capability of the terminal device, and the user plane positioning capability of the terminal device indicates that the terminal device supports the user plane positioning.

11. The method according to claim 10, wherein the user plane positioning capability of the terminal device is determined based on the positioning capability of the terminal device.

12. The method according to any one of claims 4 to 11, wherein after the sending, by the core network element, the first indication message to the terminal device based on first reference information, the method further comprises:
receiving, by the location management network element, the IP address used by the terminal device in the user plane positioning session and/or the port ID used for the user plane positioning on the terminal device that are/is sent by the mobility management network element; and
sending, by the location management network element to the target user plane positioning network element, the IP address used by the terminal device in the user plane positioning session and/or the port ID used for the user plane positioning on the terminal device.

13. The method according to any one of claims 1 to 3, wherein the core network element is a mobility management network element, and the method further comprises:
determining, by the mobility management network element, a location management network element, wherein the location management network element supports the user plane positioning manner; and
sending, by the mobility management network element, a second indication message to the location management network element, wherein the second indication message indicates to use the user plane positioning manner for positioning the terminal device.

14. The method according to claim 13, wherein the first indication message further indicates at least one of the following: a digital certificate used by a target user plane positioning network element, a type of an identity ID comprised by the terminal device in a user plane positioning session, an IP address that is reported by the terminal device and that is used by the terminal device in the user plane positioning session, a port ID that is configured by the target user plane positioning network element for the terminal device and that is used for the user plane positioning on the terminal device, a port ID that is reported by the terminal device and that is used for the user plane positioning on the terminal device, and target dedicated network information, wherein the target dedicated network information indicates a network to which the user plane positioning session used by the terminal device belongs.

15. The method according to claim 13 or 14, wherein after the sending, by the core network element, the first indication message to the terminal device based on first reference information, the method further comprises:
receiving, by the mobility management network element, the IP address used by the terminal device in the user plane positioning session and/or the port ID used for the user plane positioning on the terminal device that are/is sent by the terminal device; and
sending, by the mobility management network element to the location management network element, the IP address used by the terminal device in the user plane positioning session and/or the port ID used for the user plane positioning on the terminal device.

16. The method according to any one of claims 13 to 15, wherein the method further comprises:
receiving, by the mobility management network element, an identifier that is of the target user plane positioning network element and that is sent by the location management network element; and
sending, by the mobility management network element, the identifier of the target user plane positioning network element to the terminal device.

17. A positioning manner determining method, wherein the method comprises:
receiving, by a terminal device, a first indication message sent by a mobility management network element, wherein the first indication message indicates to use a user plane positioning manner for positioning the terminal device; and
establishing, by the terminal device, a data connection to a target user plane positioning network element.

18. The method according to claim 17, wherein the first indication message further indicates at least one of the following: an identifier of the target user plane positioning network element, a digital certificate used by the target user plane positioning network element, a type of an identity ID comprised by the terminal device in a user plane positioning session, an internet protocol IP address that is reported by the terminal device and that is used by the terminal device in the user plane positioning session, a port ID that is configured by the target user plane positioning network element for the terminal device and that is used for user plane positioning on the terminal device, a port ID that is reported by the terminal device and that is used for the user plane positioning on the terminal device, and target dedicated network information, wherein the target user plane positioning network element is a user plane positioning network element that performs user plane positioning communication with the terminal device, and the target dedicated network information indicates a network to which the user plane positioning session used by the terminal device belongs.

19. The method according to claim 17 or 18, wherein the method further comprises:
sending, by the terminal device to the mobility management network element, the IP address used by the terminal device in the user plane positioning session and/or the port ID used for the user plane positioning on the terminal device.

20. The method according to claim 19, wherein the establishing, by the terminal device, a data connection to a target user plane positioning network element comprises:
receiving, by the terminal device, a user plane positioning initialization message sent by the target user plane positioning network element, wherein the user plane positioning initialization message is used to enable the user plane positioning session; and
establishing, by the terminal device, the data connection to the target user plane positioning network element.

21. The method according to claim 20, wherein the establishing, by the terminal device, the data connection to the target user plane positioning network element comprises:
establishing, by the terminal device, the data connection to the target user plane positioning network element based on the identifier of the target user plane positioning network element; and
sending, by the terminal device, a user plane positioning start message to the target user plane positioning network element, wherein the user plane positioning start message indicates that the user plane positioning session is enabled.

22. The method according to any one of claims 17 to 21, wherein the method further comprises:
sending, by the terminal device, a registration request message to the mobility management network element, wherein the registration request message comprises a user plane positioning capability of the terminal device, and/or priorities of control plane positioning and the user plane positioning; and
receiving, by the terminal device, a registration accept message sent by the mobility management network element, wherein the registration accept message comprises: a network in which the terminal device is located supports the user plane positioning capability.

23. The method according to claim 22, wherein that a network in which the terminal device is located supports the user plane positioning capability is determined based on at least one of the following: a positioning manner configured for the mobility management network element, the user plane positioning capability of the terminal device, and a positioning manner that the terminal device subscribes to and is authorized.

24. The method according to any one of claims 17 to 21, wherein the method further comprises:
receiving, by the terminal device, a request message sent by a location management network element, wherein the request message is used to request the terminal device to report a capability of the terminal device; and
sending, by the terminal device, a response message to the location management network element, wherein the response message indicates the user plane positioning capability of the terminal device, and the user plane positioning capability of the terminal device indicates that the terminal device supports the user plane positioning.

25. The method according to claim 24, wherein the user plane positioning capability of the terminal device is determined based on a positioning capability of the terminal device.

26. The method according to any one of claims 17 to 25, wherein after the establishing, by the terminal device, a data connection to a target user plane positioning network element, the method further comprises:
obtaining, by the terminal device, positioning measurement information, wherein the positioning measurement information is used to position the terminal device; and
sending, by the terminal device, the positioning measurement information to the target user plane positioning network element.

27. A positioning manner determining apparatus, wherein the apparatus is configured to perform the method according to any one of claims 1 to 26.

28. A positioning manner determining apparatus, wherein the apparatus comprises a processor and a memory, the memory is configured to store a computer program, and the processor is configured to execute the computer program stored in the memory, to enable the apparatus to perform the method according to any one of claims 1 to 26.

29. A computer-readable storage medium, wherein the computer-readable storage medium stores a computer program; and when the computer program is run on a computer, the computer is enabled to perform the method according to any one of claims 1 to 26.

30. A chip system, comprising a processor, configured to invoke a computer program from a memory and run the computer program, to enable a communication device on which the chip system is installed to perform the method according to any one of claims 1 to 26.

31. A communication system, comprising a core network element and/or a terminal device, wherein the core network element is configured to perform the method according to any one of claims 1 to 16, or the terminal device is configured to perform the method according to any one of claims 17 to 26.
